# EUROPÄISCHE PATENTSCHRIFT

(11) **EP 0 582 831 B1**
(45) Veröffentlichungstag und Bekanntmachung des Hinweises auf die Patenterteilung: **18.03.1998**
(21) Anmeldenummer: 93110781.7
(22) Anmeldetag: 06.07.1993
(51) Int. Cl.: G01M 11/00

(54) **Einrichtung für Messungen an Lichtwellenleitern und Verfahren zur Durchführung der Messung**
Procedure and device for making measurements on optical waveguides
Procédé et dispositif pour faire des mesures avec des guides d'ondes lumineuses

(30) Priorität: 30.07.1992 DE 4225239
(43) Veröffentlichungstag der Anmeldung: 16.02.1994
(73) Patentinhaber: SIEMENS AKTIENGESELLSCHAFT, 80333 München (DE)
(72) Erfinder: Kossat, Rainer, D-83229 Aschau (DE); Loch, Manfred, Dr., D-81479 München (DE); Lieber, Winfried, Dr., D-77654 Offenburg (DE); Ruegenberg, Gervin, D-81377 München (DE)

(56) Entgegenhaltungen:
- EP-A- 0 421 657
- EP-A- 0 485 629
- WO-A-93/16363
- DE-A- 3 429 947
- US-A- 4 534 615

## Beschreibung

Die Erfindung betrifft eine Einrichtung für Messungen an mehreren Lichtwellenleitern mit einem optischen Sender, der über eine Koppelvorrichtung an die jeweils zu messenden Lichtwellenleiter ankoppelbar ist, sowie mit einem optischen Empfänger, dem eine Auswerteeinrichtung zugeordnet ist.

Eine Meßeinrichtung dieser Art ist aus der EP 0 485 629 A1 bekannt. Dort ist ein optisches Bändchenfaserkabel zur Qualitätsüberprüfung seines eingangsseitigen, stirnseitig angebrachten Verbindungssteckers mit diesem Verbindungsstecker an den ausgangsseitigen Verbindungsstecker eines fest installierten, optischen Faserkabels angeschlossen. Dieses Faserkabel dient der Einspeisung von Licht in das mit dem Verbindungsstecker stirnseitig vorpräparierte Bändchenkabel. Dazu ist die eingangsseitige Stirnseite jeder optischen Faser des fest installierten Faserkabels mit je einer des fest installierten Faserkabels Licht abgebenden Diode eines optischen Senders fest verbunden, d.h. es sind lediglich so viele Dioden wie optische Fasern vorgesehen. Diese Dioden geben Licht in einer vordefinierten Reihenfolge in die Stirnseiten der optischen Fasern des fest installierten Faserkabels ab. Dieses stirnseitig eingekoppelte Licht pflanzt sich in den optischen Fasern des optischen Faserkabels zu dessen ausgangsseitigen Ende fort und wird dort vom ausgangsseitig angebrachten Verbindungsstecker in den daran angeschlossenen, eingangsseitigen Verbindungsstecker des zu messenden Bändchenkabels eingekoppelt. Das ausgangsseitige, freie Ende des zu messenden Bändchenkabels ist auf der Grundplatte einer Empfangseinrichtung angeordnet. Sein stirnseitig offenes Ende ist gegenüber einem lichtempfindlichen Sensor mit Abstand angeordnet. Im Zwischenraum zwischen dem stirnseitig offenen Ende des Bändchenkabels und diesem lichtempfindlichen Sensor ist zusätzlich ein lichtselektives Element wie z.B. eine Schlitzblende positioniert, das mit Hilfe eines Verschiebemechanismus lateral zur Längserstreckung des Bändchenkabels in dessem ausgekoppelten Lichtstrahlungsfeld verschiebbar ist. Dieser empfangsseitige Verschiebemechanismus wird dabei derart angesteuert, daß das lichtselektive Element von Faserposition zu Faserposition entsprechend der vorgegebenen Reihenfolge der sendeseitigen Lichteinkopplung, d.h. synchron zu dieser, bewegt wird und nur für die jeweils zugeordnete Faser einen Lichtdurchgang freigibt. Der Aufbau dieser bekannten Meßeinrichtung ist somit recht aufwendig und kompliziert. Eine derartige Meßeinrichtung setzt zudem beidseitig zugängliche Stirnseiten des zu messenden Bändchenkabels voraus. Außerdem muß an einem der beiden Enden dieses Bändchenkabels der zusätzliche Verbindungsstecker angebracht werden, um es überhaupt in der Meßeinrichtung anschließen zu können.

In den von der Priorität vom 5. Februar 1992 gedeckten Teilen beschreibt die ältere, nicht vorveröffentlichte Entgegenhaltung WO-A-93 16 363 eine Einrichtung für Messungen an mehreren Lichtwellenleitern mit einem optischen Sender, der mit Hilfe einer zugehörigen Koppelvorrichtung, die als Biegekoppler ausgebildet ist, um den jeder zu messende Lichtwellenleiter unter Bildung eines frei wählbaren, gekrümmten Einkoppelabschnitts bogenförmig führbar ist, sendeseitig an die jeweils zu messenden Lichtwellenleiter zur Einkopplung von optischen Meßsignalen angekoppelt ist und ein Meßsignal in die Lichtwellenleiter einkoppelt, sowie mit einem optischen Empfänger, der mit Hilfe einer zugehörigen Koppelvorrichtung, die als Biegekoppler ausgebildet ist, um den jeder zu messende Lichtwellenleiter unter Bildung eines frei wählbaren, gekrümmten Auskoppelabschnitts bogenförmig führbar ist, empfangsseitig an die zu messenden Lichtwellenleiter zur Auskopplung von Empfangs-Strahlungsfeldern sowie deren optischer Meßsignale ankoppelbar ist und der zur Aufnahme dieser ausgekoppelten Empfangs-Strahlungsfelder mindestens ein Empfangselement aufweist, das die aus den Auskoppelabschnitten der zu messenden Lichtwellenleiter ausgekoppelten Empfangs-Strahlungsfelder erfaßt und daraus Meßsignale erzeugt, die in einer dem Empfangselement zugeordneten Auswerteeinrichtung ausgewertet werden.

Aus der EP 0 411 956 A2 ist eine Meßeinrichtung mit einem optischen Schalter bekannt, über dessen Übertragungskanäle jeweils eine von zwei Lichtquellen unterschiedlicher Wellenlängen stirnseitig an mehrere Lichtwellenleiter einzeln, zeitlich nacheinander ankoppelbar ist. Die Lichtwellenleiter sind dabei jeweils mit den Übertragungskanälen des optischen Schalters fest verspleißt. Zur Beurteilung einer Mehrfaser-Verbindungsstelle im Streckenverlauf dieser Lichtwellenleiter ist auf der Empfangsseite ein optischer Empfänger mit einem Empfangselement, vorzugsweise einem großflächigem Detektor für alle zu messenden Lichtwellenleiter, vorgesehen. Auf der Sendeseite wird ein Meßsignal jeweils einzeln in die mit den Übertragungskanälen des optischen Schalters verbundenen Lichtwellenleiter sequentiell eingespeist und auf der Empfangsseite mit dem Empfangselement aufgenommen und getrennt ausgewertet. Da die zu messenden Lichtwellenleiter mit den Übertragungskanälen des optischen Schalters verspleißt, d.h. fest verbunden sind, ist eine variable, lösbare An- bzw. Abkopplung der Lichtwellenleiter nur verhältnismäßig schwierig möglich.

Für eine Ankopplung neu zu messender Lichtwellenleiter wäre jeweils zunächst eine Auftrennung der bereits bestehenden Spleißverbindungen erforderlich. Dann müßten die Lichtwellenleiter jeweils an ihren endseitigen, offenen Stirnseiten mit den Ausgängen des optischen Schalters verspleißt werden. Für eine flexible, zerstörungsfreie An- bzw. Abkopplung der jeweiligen Lichtquellen wie sie z.B. bei optischen Übertragungsstrecken mit Lichtwellenleiter-Bändchen zur Überprüfung von Mehrfach-Spleißverbindungen gewünscht ist, wäre diese bekannte Meßeinrichtung somit kaum zu gebrauchen.

Aus der DE 34 29947 C2 ist eine Meßeinrichtung zur Beurteilung einer Spleißstelle eines einzelnen Lichtwellenleiters bekannt. Vor der Spleißstelle wird ein Sendesignal mit Hilfe eines Biegekopplers in den Lichtwellenleiter eingespeist und nach der Spleißstelle auf der Empfangsseite mittels eines zweiten Biegekopplers ausgekoppelt. Das Austrittsfeld des ausgekoppelten Sendesignals wird von einer Fotodiode empfangen und anschließend angezeigt. Würde man mehrere Lichtwellenleiter in diese bekannte Meßeinrichtung einlegen, so könnte allenfalls die einfache Summe der einzelnen, eingekoppelten Strahlungsfelder der Lichtwellenleiter gemessen werden. Aus dieser Superpositions-Summe sind Aussagen und Rückschlüsse auf die individuellen optischen Übertragungskenngrößen der einzelnen Lichtwellenleiter innerhalb der bekannten Meßeinrichtung nicht möglich, da aus dieser Summe eine funktionale Abhängigkeit zwischen den einzelnen optischen Meßwerten nicht ableitbar ist.

Der Erfindung liegt die Aufgabe zugrunde, eine Meßeinrichtung zu schaffen, mit deren Hilfe optische Übertragungskenngrößen mehrerer Lichtwellenleiter selektiv in einfacher und zuverlässiger Weise aufgenommen werden können.

Diese Aufgabe wird gelöst mit einer Einrichtung für Messungen an mehreren Lichtwellenleitern mit einem optischen Sender, der eine kleinere oder eine größere Anzahl an Sendeelementen aufweist als die Anzahl der zu messenden Lichtwellenleiter und der mit Hilfe einer zugehörigen Koppelvorrichtung, die als Biegekoppler ausgebildet ist, um den jeder zu messende Lichtwellenleiter unter Bildung eines frei wählbaren, gekrümmten Einkoppelabschnitts bogenförmig führbar ist, sendeseitig an die jeweils zu messenden Lichtwellenleiter zur Einkoppelung von optischen Meßsignalen ankoppelbar ist, wobei die Sendeelemente bezüglich der Lichtwellenleiter im Koppelbereich des sendeseitigen Biegekopplers derart angeordnet sind und der optische Sender derart ausgebildet ist, daß mit Hilfe mindestens eines Sendeelementes jeweils ein Sende-Strahlungsfeld mit seinem Leuchtfleck erzeugt wird, dieser Leuchtfleck zeitlich nacheinander die Einkoppelabschnitte der zu messenden Lichtwellenleiter entlangstreicht und dabei jeweils ein Meßsignal in den jeweiligen Lichtwellenleiter selektiv unterscheidbar einkoppelt, sowie mit einem optischen Empfänger, der mit Hilfe einer zugehörigen Koppelvorrichtung, die als Biegekoppler ausgebildet ist, um den jeder zu messende Lichtwellenleiter unter Bildung eines frei wählbaren, gekrümmten Auskoppelabschnitts bogenförmig führbar ist, empfangsseitig an die zu messenden Lichtwellenleiter zur Auskoppelung von Empfangs-Strahlungsfeldern sowie deren optischer Meßsignale ankoppelbar ist und der zur Aufnahme dieser ausgekoppelten Empfangs-Strahlungsfelder mindestens ein Empfangselement aufweist, das im Koppelbereich dieses empfangsseitigen Biegekopplers so ausgerichtet und ausgebildet ist, daß es die aus den Auskoppelabschnitten der zu messenden Lichtwellenleiter ausgekoppelten Empfangs-Strahlungsfelder erfaßt und daraus unterschiedliche Meßsignale erzeugt, wobei diese Meßsignale in einer dem Empfangselement zugeordneten Auswerteeinrichtung getrennt auswertbar sind.

Die Erfindung verbessert die Möglichkeiten zur selektiven Bestimmnung und Auswertung optischer Übertragungskenngrößen mehrerer Lichtwellenleiter ganz erheblich. Während dafür bei der bekannten Meßeinrichtung der EP 0411 956 A2 mit nur einem einzigen Sende- und mit nur einem einzigen Empfangselement für n Lichtwellenleiter n Einzelmessungen sukzessive hintereinander auszuführen wären, ist bei der Erfindung nur noch ein einziger gemeinsamer Ankoppelvorgang für alle zu messenden Lichtwellenleiter erforderlich. Dies führt bei der selektiven Bestimmung der optischen Übertragungskenngrößen pro Lichtwellenleiter sowohl zu einer Reduzierung des Arbeitsaufwandes als auch zu einer Arbeitszeitersparnis. Die selektive Messung der optischen Übertragungskenngrößen der Lichtwellenleiter wird zudem dadurch einfach und flexibel gehalten, daß sowohl die sendeseitige Einkopplung unterscheidbarer Sende-Strahlungsfelder in die zu messenden Lichtwellenleiter als auch die empfangsseitige Auskopplung deren zugehöriger Empfangs-Strahlungsfelder jeweils für alle zu messenden Lichtwellenleiter gemeinsam nach dem Biegekopplerprinzip durchgeführt wird. Dadurch ist es nicht erforderlich, die zu messende Gruppe von Lichtwellenleiter, insbesondere ein Lichtwellenleiter-Bändchen, beispielsweise vor einer zu untersuchenden Mehrfachspleißstelle zu durchtrennen, um in die offenen Stirnseiten der Lichtwellenleiter die Sende-Strahlungsfelder selektiv einspeisen zu können. Durch den Biegekoppler als Koppelvorrichtung ist es vielmehr ermöglicht, daß auf der Sendeseite die Sende-Strahlungsfelder an einem frei wählbaren Einkoppelort entlang der Lichtwellenleiter zerstörungsfrei in einfacher Weise selektiv in die zu messenden Lichtwellenleiter eingekoppelt werden können. Dadurch ist die An- bzw. Abkopplung des optischen Senders schnell wiederholt durchführbar.

Da jeweils ein Sende-Strahlungsfeld aus mindestens einem Sendeelement mit seinem Leuchtfleck zeitlich nacheinander die Einkoppelabschnitte bzw. -bereiche der zu messenden Lichtwellenleiter im Koppelbereich entlangstreicht bzw. überstreicht, wird jeweils ein Meßsignal in die zu messenden Lichtwellenleiter selektiv eingekoppelt.

Ist die Anzahl der Sendeelemente kleiner als die Anzahl der zu messenden Lichtwellenleiter, so kann es zweckmäßig sein, jeweils das Sende-Strahlungsfeld mindestens eines Sendeelementes zeitlich nacheinander über die Einkoppelbereiche der Lichtwellenleiter mit Hilfe einer variablen Strahlablenkvorrichtung streichen zu lassen. Die Bewegung des Sende-Strahlungsfeldes kann z.B. auf mechanischem Weg mit Hilfe eines rotierenden Spiegels durchgeführt werden, so daß Licht zeitlich nacheinander und damit unterscheidbar in Richtung auf die messenden Lichtwellenleiter abgelenkt und in diese eingekoppelt wird. Vorteilhaft ist auch eine Strahlablenkung durch elektro/akusto-optischer Mittel, wie z.B. mit akusto-optischen Modulatoren, möglich. Genauso kann vorteilhaft auch eine Blendenvorrichtung mit einer mechanisch beweglichen Schlitzblende oder mit einer elektro-optischen Blende, wie z.B. LCS (Liquid crystal shutter) zum sequentiellen Einkoppeln der Sende-Strahlungsfelder vorgesehen sein.

Weiterhin kann es insbesondere zweckmäßig sein, die Sendeelemente im Zeitmultiplexbetrieb zeitlich nacheinander derart anzusteuern, daß deren Sende-Strahlungsfelder bzw. deren Leuchtflecke sequentiell in der Art einer durchgeschalteten "Lichterkette" in die zu messenden Lichtwellenleiter eingekoppelt werden. Die optischen Übertragungskenngrößen können für jeden Lichtwellenleiter dann besonders exakt selektiv gemessen werden.

Den zu messenden Lichtwellenleiter im Koppelbereich der Koppelvorrichtung kann auch eine größere Anzahl an Sendeelementen im optischen Sender zugeordnet sein. Dadurch ist z.B. im Zeitpultiplexbetrieb der Sendeelemente vorteilhaft sichergestellt, daß die Einkoppelabschnitte der zu messenden Lichtwellenleiter mit hoher Ortsauflösung, d.h. feiner, beleuchtet werden und dadurch insbesondere die örtliche Leistungsverteilung der Lichtwellenleiter exakt aufgenommen und zur weiteren Auswertung bereitgestellt werden kann. In diesem Fall können die optischen Übertragungskenngrößen also selektiv exakt mit weiter verbesserter Auflösung gegenüber dem Fall gemessen werden, bei dem die Anzahl der Sendeelemente kleiner als die Anzahl der zu messenden Lichtwellenleiter ist. Ist die Anzahl der Sendeelemente größer als die Anzahl der Lichtwellenleiter, so ist eine exakte, eindeutige Ausrichtung bzw. Zuordnung des jeweiligen Sende-Strahlungsfeldes auf die Einkoppelabschnitte bzw. -bereiche der zu messenden Lichtwellenleiter nicht mehr notwendig.

Gemäß einer zweckmäßigen Weiterbildung der Erfindung kann zur Erzeugung unterscheidbarer Sende-Strahlungsfelder ferner eine Modulationseinrichtung vorgesehen sein oder es kann mit unterschiedlichen Sendefrequenzen gearbeitet werden.

Die Erfindung betrifft weiterhin ein Verfahren zum Messen optischer Übertragungskenngrößen von mehreren Lichtwellenleitern, wobei ein optischer Sender, der eine kleinere oder eine größere Anzahl an Sendeelementen aufweist als die Anzahl der zu messenden Lichtwellenleiter, zur Einkoppelung von optischen Meßsignalen an die jeweils zu messenden Lichtwellenleiter mit Hilfe einer zugehörigen Koppelvorrichtung, die als Biegekoppler ausgebildet ist, um den jeder zu messende Lichtwellenleiter unter Bildung eines frei wählbaren, gekrümmten Einkoppelabschnitts bogenförmig geführt wird, sendeseitig angekoppelt wird, wobei mit Hilfe mindestens eines Sendeelements jeweils ein Sende-Strahlungsfeld mit einem Leuchtfleck im Koppelbereich des sendeseitigen Biegekopplers erzeugt, mit diesem Leuchtfleck zeitlich nacheinander den Einkoppelabschnitten der zu messenden Lichtwellenleiter entlanggestrichen und dabei ein Meßsignal in den jeweiligen zu messenden Lichtwellenleiter selektiv unterscheidbar eingekoppelt wird, wobei ein optischer Empfänger mit Hilfe einer zugehörigen Koppelvorrichtung, die als Biegekoppler ausgebildet ist, um den jeder zu messende Lichtwellenleiter unter Bildung eines frei wählbaren, gekrümmten Auskoppelabschnitts bogenförmig geführt wird, empfangsseitig an die zu messenden Lichtwellenleiter zur Auskoppelung von Empfangs-Strahlungsfeldern sowie deren optischer Meßsignale angekoppelt wird, wobei die Empfangs-Strahlungsfelder im optischen Empfänger mit Hilfe mindestens eines Empfangselementes, das im Koppelbereich des empfangsseitigen Biegekopplers die aus den Auskoppelabschnitten der zu messenden Lichtwellenleiter ausgekoppelten Empfangs-Strahlungsfelder erfaßt und daraus unterscheidbare Meßsignale erzeugt, aufgenommen werden und wobei diese Meßsignale in einer dem Empfangselement zugeordneten Auswerteeinrichtung getrennt ausgewertet werden.

Sonstige Weiterbildungen der Erfindung sind in den abhängigen Ansprüchen wiedergegeben.

Die Erfindung und ihre Weiterbildungen werden nachfolgend anhand von Zeichnungen näher erläutert.

Es zeigen:
- Fig. 1: in teilweise perspektivischer Darstellung den schematischen Gesamtaufbau einer erfindungsgemäßen Meßeinrichtung,
- Fig. 2: im Detail den sendeseitigen Aufbau der Meßeinrichtung nach Fig. 1,
- Fig. 3: in vergrößerter, schematischer Darstellung eine erste Abwandlung des optischen Senders nach Figur 1,
- Fig. 4: als Einzelheit ein zweites Ausführungsbeispiel des optischen Senders nach Figur 1, und
- Fig. 5: in schematischer Darstellung die Sendeverhältnisse bei einem dritten Ausführungsbeispiel des optischen Senders nach Figur 1.

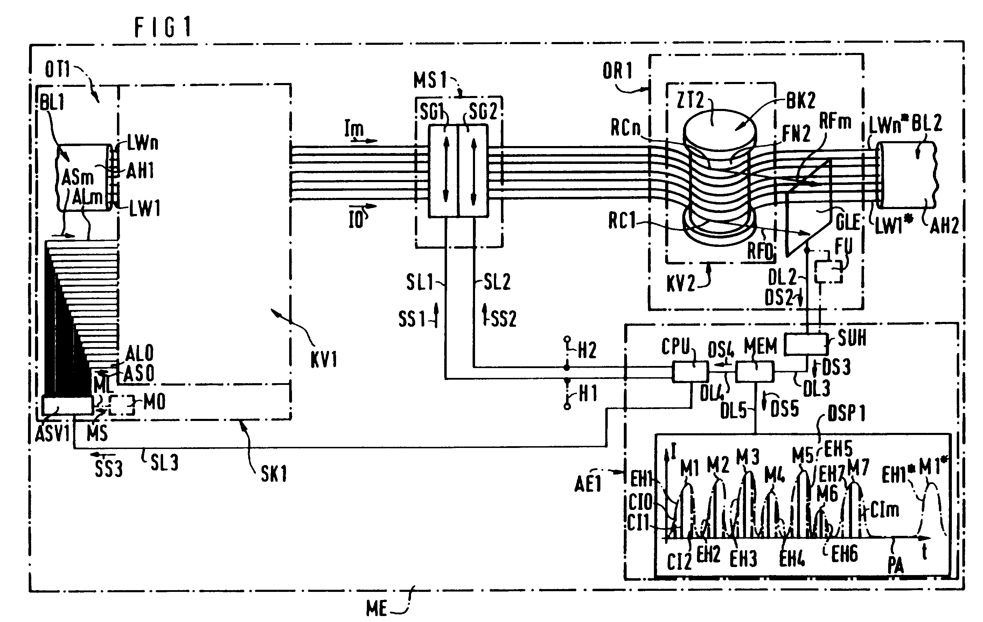

In Figur 1 ist eine erfindungsgemäße Meßeinrichtung ME dargestellt, die als Komponenten eine Sende-Koppeleinrichtung SK mit einem optischen Sender OT1 samt zugehöriger Koppelvorrichtung KV1 als Einkoppelmittel, eine Mehrfach-Spleißeinrichtung MS1, einen optischen Empfänger OR1 und eine Auswerteeinrichtung AE1 aufweist. Diese Komponenten können zweckmäßigerweise zu einem Meßgerät, insbesondere zu einem Meßkoffer, zusammengefaßt sein. Sie können aber auch vorteilhaft Bestandteil eines Lichtwellenleiter-Spleißgerätes oder eines Lichtwellenleiter-Dämpfungsmeßgerätes sein. Neben diesem besonders vorteilhaften Anwendungsgebiet der Erfindung ermöglicht die Erfindung auch die selektive Bestimmung weiterer optischer Übertragungskenngrößen wie z.B. der Phasenlaufzeiten, Impulsantworten, Streckendämpfungen, usw. Für die nachfolgenden Ausführungsbeispiele wird jeweils auf die Spleißdämpfung von Lichtwellenleitern Bezug genommen.

In Figur 1 stehen sich in der Mehrfach-Spleißeinrichtung MS1 eine Bandleitung BL1 mit Lichtwellenleitern LW1 bis LWn und eine zweite, mit ihr zu verschweißende Bandleitung BL2 mit Lichtwellenleitern LW1* bis LWn* gegenüber. Die Lichtwellenleiter LW1 bis LWn sind nahezu parallel in einer flachen, etwa rechteckförmig, äußeren Umhüllung AH1 (aus Kunststoffmaterial) der Bandleitung BL1 eingebettet. Diese äußere Umhüllung AH1 ist nur im linken Teil der Figur 1 angedeutet und im übrigen Figurenteil zugunsten der Übersichtlichkeit weggelassen worden. Entsprechend dazu sind die Lichtwellenleiter LW1* bis LWn* der Bandleitung BL2 in einer ebenfalls etwa rechteckförmig, äußeren Umhüllung AH2 ungefähr parallel nebeneinander angeordnet und mechanisch miteinander verbunden. Die äußere Umhüllung AH2 der Bandleitung BL2 ist der Übersichtlichkeit halber nur im rechten Teil von Figur 1 dargestellt und dann weggelassen worden.

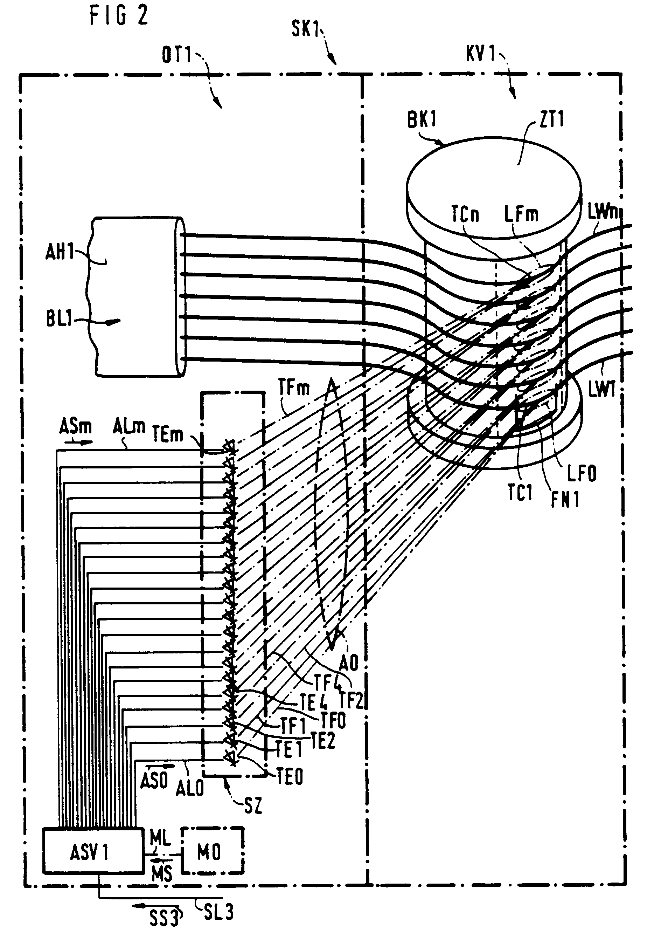

Um den optischen Sender OT1 mittels der Koppelvorrichtung KV1 an die Lichtwellenleiter LW1 bis LWn der Bandleitung BL1 im linken Teil von Figur 1 anzukoppeln, sind wie aus Fig. 2 ersichtlich, die Lichtwellenleiter LW1 bis LWn um einen Zylinder (Biegedorn) ZT1 eines Biegekopplers BK1 in etwa bogenförmig herumgelegt. Der Biegekoppler BK1 weist zur seitlichen Lagesicherung und zur Führung der Bandleitung BL1 am Umfang seines Zylinders ZT1 eine Führungsnut FN1 auf, deren Breite in etwa der Breite der in sie eingelegten Bandleitung BL1 entspricht.

Um in die Lichtwellenleiter LW1 bis LWn selektiv unterscheidbare Meßsignale I0 bis Im (Figur 1) einkoppeln zu können, weist der optische Sender OT1 Sendeelemente TE0 bis TEm auf, die Sende-Strahlungsfelder TFO bis TFm in Richtung auf die gekrümmt geführten Lichtwellenleiter LW1 bis LWn im Koppelbereich des Biegekoppler BK1 abgeben können. Die Sendeelemente TE1 bis TEm sind im optischen Sender OT1 in einer strichpunktiert eingerahmten Sendezeile SZ angeordnet, die sich auf der linken Seite des Biegekopplers BK1 in der Nähe von dessen Koppelbereich (= Lichtwellenleiter LW1 - LWn gekrümmt verlaufend) quer zur Längsachse der Bandleitung BL1 erstreckt. Die Anordnung der Sendeelemente TEO bis TEm ist somit in besonderem Maße der strukturierten Anordnung der zu messenden Lichtwellenleiter LW1 bis LWn im Biegekoppler BK1 angepaßt. Daneben kann es auch zweckmäßig sein, die Sendeelemente TEO bis TEm in einem Array (Senderfeld) zusammenzufassen. Als Sendeelemente TEO bis TEm eignen sich vorteilhaft Laserdioden, die vorzugsweise in Form einer Zeile bzw. eines Arrays zusammengefaßt sind ( z.B. von der Firma Epitaxx). Zweckmäßig können als Sendeelemente TE1 bis TEm auch einzelne Laserdioden oder LEDs verwendet werden.

Die Sendeelemente TEO bis TEm in der Sendezeile SZ werden zeitlich nacheinander, d.h. sequentiell, von einer Ansteuervorrichtung ASV1 mittels Steuersignale ASO bis ASm über Steuerleitungen ALO bis ALm aktiviert. Die Sendeelemente TEO bis TEm werden also im Zeitmultiplexbetrieb angesteuert, wobei sie zeitlich unterscheidbare Sende-Strahlungsfelder TF0 bis TFm erzeugen. Deren selektive Einkopplung entlang jeweils eines Einkoppelabschnittes bzw. Einkoppelbereiches TC1 bis TCn der dort bogenförmig verlaufenden Lichtwellenleiter LW1 bis LWn wird durch ein entsprechendes Anordnen und Ausrichten der Sendeelemente TE0 bis TEm der Sendezeile SZ erreicht. Die Sende-Strahlungsfelder TF0 bis TFn treten dabei nahezu tangential in die Einkoppelabschnitte TC1 bis TCn ein. Das sequentielle Einkoppeln der Meßsignale I0 bis Im durch die Strahlungsfelder TF0 bis TFm kann beispielsweise mit dem Aktivieren des ersten Sendeelementes TE0 gestartet werden. Die Ansteuervorrichtung ASV1 aktiviert dann zeitlich nacheinander alle weiteren Sendeelemente TE1 bis TEm in der Sendezeile SZ. Auf diese Weise beleuchten die Strahlungsfelder TF0 bis TFm die Einkoppelabschnitte TC1 bis TCn der gekrümmten Lichtwellenleiter LW1 bis LWn jeweils mit ihren strichpunktiert, oval angedeuteten Leuchtflecken LF0 bis LFm schrittweise nacheinander. Alle Sende-Strahlungsfelder sind dabei vorzugsweise parallel ausgerichtet, so daß z.B. bei ihrer zeitlich nacheinander erfolgenden "Ausfeuerung" in gleichen zeitlichen Abständen der resultierende Leuchtfleck längs einer Linie z.B. von unten (beginnend beim Einkoppelabschnitt TC1) nach oben (endend beim Einkoppelabschnitt TCn) wandert.

Die Leuchtflecke LFD bis LFm weisen entlang der jeweiligen Einkoppelabschnitte TC1 bis TCn jeweils vorzugsweise eine axiale Ausdehnung in Richtung der Längsachse der Lichtwellenleiter LW1 bis LWn auf, die mindestens gleich der halben Dicke des Lichtwellenleiter-Bändchens gewählt wird (d.h. im allgemeinen mindestens 200 µm). Ihre Breite quer zur Längsrichtung der zu messenden Lichtwellenleiter LW1 bis LWn ist dort kleiner gewählt als der Abstand der Längsachsen zweier benachbarter Lichtwellenleiter. Dadurch ist sichergestellt, daß jeder Leuchtfleck LF0 bis LFm jeweils nur in einen der Lichtwellenleiter LW1 bis LWn Licht einkoppelt und nicht in mehrere. Jedes Sendeelement TE0 bis TEm erzeugt somit einen Leuchtfleck LF0 bis LFm, der eindeutig jeweils einem bestimmten der Lichtwellenleiter LW1 bis LWn zugeordnet ist. Zur selektiven Bestimmung der optischen Übertragungskenngrößen der Lichtwellenleiter LW1 bis LWn kann es bereits genügen, daß die Ansteuervorrichtung ASV1 die Kette der Sendeelemente TE0 bis TEm nur einmal aktiviert. Für eine weitergehende, genauere Messung kann es zweckmäßig sein, daß die Ansteuervorrichtung ASV1 eine mehrmals durchlaufende "Lichterkette" auslöst. Zweckmäßigerweise kann die Ansteuervorrichtung ASV1 jeden Durchlauf kennzeichnen, z.B. durch eine entsprechend große Pause oder durch ein besonderes Signal.

Bezüglich der Zahl n der Lichtwellenleiter LW1 bis LWn innerhalb des Bändchens BL1 und der Anzahl m der Sendeelemente TEO bis TEm gibt es folgende Möglichkeiten:
a) m > n
b) m = n
c) m < n

Bei dem Ausführungsbeispiel nach Figur 2 ist der Fall a) dargestellt, das heißt, es sind mehr Sendeelemente TE0 bis TEm vorhanden als Lichtwellenleiter LW1 bis LWn (m > n). Für dieses Anwendungsbeispiel ist angenommen, daß jeweils drei aufeinanderfolgende Sendeelemente einem Lichtwellenleiter zugeordnet sind. Beispielsweise sind die Sendeelemente TE0, TE1 und TE2 dem Lichtwellenleiter LW1 zugeordnet, das heißt die von den Sendeelementen TE0 bis TE2 erzeugten Strahlugnsfelder TF0 bis TF2 erzeugen Leuchtflecke LF0 bis LF2, die räumlich so liegen, daß durch sie nur eine Einkopplung in den Lichtwellenleiter LW1 erfolgt. Dagegen wird der nächste benachbarte Lichtwellenleiter LW2 durch die Strahlungsfelder der Sendeelemente TE1 und TE2 nicht beaufschlagt. Wegen der etwas unterschiedlichen räumlichen Anordnung der Sendeelemente TE0 bis TE2 sind die zugehörigen Leuchtflecke LF0 bis LF2 (erzeugt durch die Strahlungsfelder TF0 bis TF2) in Wirklichkeit natürlich etwas verschieden; sie decken sich jedoch zum großen Teil. Deshalb ist im Bereich des Koppelabschnittes TC1 des Lichtwellenleiters LW1 nur ein Leuchtfleck LF0 dargestellt, der diesen drei Strahlungsfeldern TF0 bis TF2 in etwa gemeinsam ist. Die räumliche Verschiebung der in Wirklichkeit vorhandenen, unterschiedlichen Einzel-Leuchtflecke ist immer dann unerheblich, solange nicht eine Einkopplung aufgrund der Strahlungsfelder TF0 bis TF2 in den benachbarten, nächsten Lichtwellenleiter LW2 erfolgt.

Es ist zweckmäßig, die Zahl der Sendeelemente m nach der Beziehung
m = kn zu wählen, wobei k eine ganze Zahl ist. Im vorliegenden Beispiel ist k = 3 gewählt, das heißt jeweils drei Sendeelemente (zum Beispiel TE0 bis TE2) beleuchten einen Lichtwellenleiter (zum Beispiel LW1).

Je größer die Zahl der Sendeelemente gewählt wird, desto größer ist die erreichbare Auflösung. Andererseits steigt mit größerer Anzahl der Sendeelemente auch der Aufwand auf der Sendeseite, so daß ihre Zahl nicht unnötig groß gewählt werden sollte.

Im Rahmen der Erfindung ist es auch möglich, einzelnen Lichtwellenleitern jeweils eine unterschiedliche Zahl von Sendeelementen bzw. daraus abgeleiteten Strahlungsfeldern zuzuordnen. Beispielsweise könnte auch so verfahren werden, daß dem Lichtwellenleiter LW1 die Sendeelemente TE0 bis TE2 (und damit die Strahlungsfelder TF0 bis TF2) zugeordnet werden, während der nächste Lichtwellenleiter LW2 zum Beispiel von den Strahlungsfeldern der nachfolgenden vier Sendeelemente beaufschlagt wird usw. Dies hätte zur Folge, daß bei einem "Durchlauf" im ersten Lichtwellenleiter drei Empfangssignale und im zweiten Lichtwellenleiter LW2 vier Empfangssignale empfangen und zur Aufwertung bereitgestellt würden. Auf jeden Fall sollte aber darauf geachtet werden, daß die Zuordnung der Sendeelemente einerseits zu den einzelnen Lichtwellenleitern andererseits eindeutig und reproduzierbar ist und bleibt.

Bei entsprechend hoher sendeseitiger Ortsauflösung, d.h. insbesondere für m » n ist schließlich eine exakte, eindeutige Ausrichtung bzw. Zuordnung der Sende-Strahlungsfelder TF0 - TFm auf die Einkoppelabschnitte TC1 - TCn der gekrümmt verlaufenden Lichtwellenleiter LW1 - LWn nicht mehr erforderlich.

Für den Fall b), das heißt m = n, wäre im vorliegenden Beispiel nur noch jeweils ein Sendeelement genau einem Lichtwellenleiter zugeordnet. Es könnten also die jeweils strichpunktiert angedeuteten Sende-Strahlungsfelder entfallen. Für den Lichtwellenleiter LW1 würde dies bedeuten, daß das Sendeelement TE0 und das Sendeelement TE2 weggelassen werden und dementsprechend auch die strichpunktiert angedeuteten Strahlungsfelder TF0 und TF2. Jeweils ein Strahlungsfeld (zum Beispiel TF1) eines Sendeelementes (zum Beispiel TE1) beleuchtet genau einen Lichtwellenleiter (zum Beispiel LW1). Um hier - da bezüglich eines Lichtwellenleiters hinsichtlich der "Beleuchtung" durch Strahlungsfelder keine Redundanz mehr besteht - eine eindeutige und sichere Messung durchführen zu können, müßte die Zuordnung und Ausrichtung der Sendeelemente möglichst exakt vorgenommen werden.

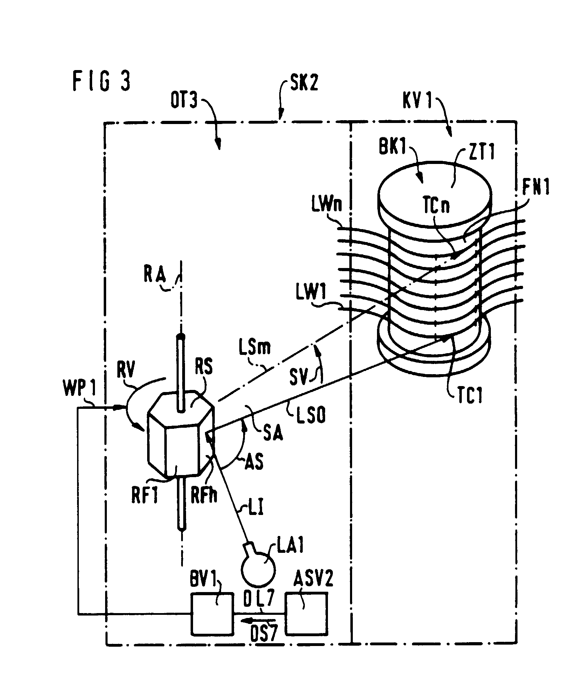

Der Fall c), das heißt, daß die Zahl der Sendeelemente kleiner als die Zahl der Lichtwellenleiter gewählt ist (m < n), wird mit seinen Auswirkungen und dem zugehörigen Hintergrund näher anhand der Figuren 3 mit 5 erläutert. Gedanklich kann man sich diese Art der Einkopplung von Meßsignalen auf der Sendeseite im Zusammenhang mit Figur 2 auch so vorstellen, daß ein Sendeelement (zum Beispiel TE2) so ausgelegt ist, daß das von ihm erzeugte Strahlungsfeld sowohl auf den Lichtwellenleiter LW1 als auch auf den Lichtwellenleiter LW2 trifft. Die Auswertung der Meßsignale erfolgt dann selektiv auf der Empfangsseite, das heißt, es werden zum Beispiel bei zehn aufeinander folgenden Sendeimpulsen nacheinander zunächst fünf Empfangssignale aus dem Lichtwellenleiter LW1 ausgewertet und anschließend die nächsten fünf Empfangssignale aus dem Lichtwellenleiter LW2.

Die sendeseitigen Koppelverhältnisse können vorteilhaft dadurch verbessert werden, daß zwischen den Sendeelementen TE0 bis TEm im optischen Sender OT1 und den Lichtwellenleitern LW1 bis LWn optische Hilfsmittel, wie z.B. Linsen oder Lichtwellenleiter, zwischengeschaltet werden. In Figur 1 ist beispielhaft eine optische Linse A0 strichpunktiert eingezeichnet. Durch diese Maßnahme kann vorteilhaft ein größerer Abstand zwischen den Sendeelementen TE0 bis TEm und den Einkoppelabschnitten TC1 bis TCn der Lichtwellenleiter LW1 - LWn überwunden werden, wie er z.B. durch ein Gehäuse vorgegeben sein kann, das die Sendeelemente TE0 bis TEm umgibt. Die optischen Hilfsmittel bilden also die unmittelbar "ausgefeuerten" Sende-Strahlungsfelder TF0 - TFm auf die Einkoppelabschnitte TC1 - TCn ab.

Um ein unerwünschtes Überkoppeln benachbarter Strahlungsfelder TF0 bis TFm zu verhindern, können zwischen den Sendeelementen TE0 bis TEm und deren Sende-Strahlungsfelder TE0 bis TFm zweckmäßigerweise Seitenblenden eingefügt sein.

In Figur 1 laufen die eingekoppelten Meßsignale I0 bis Im durch die zu messenden Lichtwellenleiter LW1 bis LWn über die Mehrfach-Spleißeinrichtung MS1 zur Empfangsseite. Ein Anteil von ihnen wird dort in einer zweiten Koppelvorrichtung KV2 (analog aufgebaut wie KV1) von dem optischen Empfänger OR1 mittels eines zweiten Biegekopplers BK2 in etwa tangentialer Richtung ausgekoppelt. Zu diesem Zweck sind die Lichtwellenleiter LW1* bis LWn* der zweiten Bandleitung BL2 in einer Führungsnut FN2 um einen Zylinder ZT2 analog zur Sendeseite gekrümmt herumgelegt. Dadurch treten Empfangs-Strahlungsfelder RF0 bis RFm jeweils entlang Auskoppelabschnitte RC1 bis RCn der bogenförmig geführten Lichtwellenleiter LW1 bis LWn im Koppelbereich des Biegekopplers BK2 aus. Da die Sendeelemente TE0 bis TEm im betrachteten Beispiel zeitlich nacheinander aktiviert werden, erscheinen die Strahlungsfelder RF0 bis RFm in entsprechender zeitlicher Reihenfolge. Sie werden daher zeitlich nacheinander, d.h. sequentiell, von einem gemeinsamen, lichtempfindlichen Element GLE jeweils vollständig aufgenommen, von diesem jeweils in ein elektrisches Meßsignal DS2 umgewandelt und über eine Signalleitung DL2 an ein Digitalisierglied SUH der Auswerteeinrichtung AE1 übertragen. Dieses nimmt eine Abtastung und Digitalisierung der zeitlich nacheinander ankommenden elektrischen Meßsignale DS2 in kurzen Zeitabständen vor und überträgt die digitalisierten Meßsignale DS3 über eine Leitung DL3 zu einem Meßwertspeicher MEM der Auswerteeinrichtung AE1. Aus diesem Meßwertspeicher MEM können die digitalisierten Meßdaten über eine Leitung DL5 als ein Signal DS5 an eine Anzeigeeinrichtung DSP1, z.B. ein Display, der Auswerteeinrichtung AE1 weitergeleitet und dort visuell dargestellt werden.

Eine Auskopplung von Empfangs-Strahlungsfeldern über ausgangsseitig zugängliche, offene Stirnseiten der zu messenden Lichtwellenleiter LW1 bis LWn ist zur Auswertung der Meßsignale I1 - Im auch möglich. Der Biegekoppler BK2 entfällt dann, während die übrigen Komponenten des optischen Empfängers OR1 in gleicher Weise wie oben beschrieben arbeiten.

Obwohl es für eine selektive, unterscheidbare Aufnahme der Empfangs-Strahlungsfelder völlig ausreichend ist, ein einziges großflächiges Empfangselement GLE für alle zu messenden Lichtwellenleiter gemeinsam vorzusehen, kann es auch vorteilhaft sein, mehrere Empfangselemente, insbesondere in Zeilen- oder Arrayform anstelle des gemeinsamen Elementes GLE anzubringen. Als Empfangselemente eignen sich z.B. herkömmliche Photodioden, CCD-Elemente, Diodenarrays, CID-Elemente, Diodenzeilen, usw.

Die Momentaufnahme in der Anzeigeeinrichtung DSP1 zeigt über der Zeitachse t eine Intensitäts- bzw. Leistungsverteilung I, wie sie beim sequentiellen Einkoppeln der Strahlungsfelder TF0 bis TFm aus der Figur 2 der Sendeelemente TE0 bis TEm entsteht. Die Lichteinkopplung beginnt dabei beim Lichtwellenleiter LW1 und endet beim Lichtwellenleiter LWn, wobei n = 7 ist.

Für den in Figur 2 dargestellten Fall mit m = k . n, wobei k = 3 gewählt wurde, ist eine mögliche Leistungsverteilung I in Abhängigkeit von der Zeit t in der Anzeigeeinrichtung DSP1 dargestellt. Da in Figur 2 jeweils drei Sendeelemente einem Lichtwellenleiter zugeordnet sind, ergeben sich auch für jeden der insgesamt sieben Lichtwellenleiter insgesamt drei Empfangssignale, wenn die Kette der Sendeelemente SZ nach Figur 1 einmal wie eine "Lichterkette" durchlaufen wird. Dabei sind für diese Empfangssignale die gleichen Indizes verwendet wie für die Sendesignale, das heißt, der diskrete Empfangswert CI0 entspricht dem Sendesignal des Sendeelementes TE0, das Empfangssignal CI1 entspricht dem Sendesignal des Sendeelementes TE1 und das Empfangssignal CI2 entspricht dem Sendesignal des Sendeelementes TE2. Entsprechend den insgesamt vorgesehenen sieben Lichtwellenleitern ergeben sich sieben Einhüllende EH1 bis EH7 mit jeweils drei diskreten Meßwerten, wobei die Maxima dieser Einhüllenden mit M1 bis M7 bezeichnet sind. Nach einer bestimmten zeitlichen Pause PA folgt die nächste Meßreihe, die wiederum mit dem ersten Lichtwellenleiter LW1 beginnt, wobei die zugehörige Ein-hüllende mit EH1* und das zugehörige Maximum mit M1* bezeichnet ist.

Nachfolgend wird vereinfachend vorausgesetzt, daß alle Sendeelemente TE0 bis TEm in Figur 2 den gleichen Sendepegel abgeben. Wenn die einzelnen Leuchtflecke die jeweils einem Lichtwellenleiter zugeordnet sind, räumlich genau gleich ausgerichtet wären (das heißt exakt zusammenfallen würden), dann würden sich für einen Lichtwellenleiter jeweils aufeinanderfolgend drei untereinander gleich große Empfangssignale ergeben. Diese Ausrichtung ist jedoch wegen der unterschiedlichen, räumlichen Konfiguration der einzelnen Sendeelemente in der Praxis nicht zu realisieren, so daß auf der Empfangsseite für die drei jeweils einem Lichtwellenleiter zugeordneten Sendeelemente unterschiedliche Empfangspegel erhalten werden. So ist innerhalb der dem Lichtwellenleiter LW1 zugeordneten Einhüllenden EH1 der Empfangssignale CI0 bis CI2 das Empfangssignal CI0 (von TE0 kommend) besonders klein, während die Empfangssignale CI1 (von TE1 kommend) wesentlich größer und das Empfangssignal CI2 (von TE2 kommend) am größten ist. Damit läßt sich hinsichtlich der Zuordnung der Leuchtflecke der drei genannten Sendeelemente TE0 bis TE2 sagen, daß der Leuchtfleck des Sendeelements TE2 mit dem höchsten Kopplungsfaktor eingekoppelt wird. Hierfür gibt es zwei Möglichkeiten, nämlich einerseits, daß (bei idealer Ausrichtung der Lichtwellenleiter innerhalb des Lichtwellenleiterbändchens BL1) die Ausrichtung der Sendeelemente TE0 bis TE2 bezüglich des Lichtwellenleiters LW1 nicht ideal ist. Bei einer nicht idealen Anordnung der Lichtwellenleiter im Bändchen BL1 (jedoch bei idealer Anordnung der Sendeelemente TE0 bis TEm) kann aus dem durch die Einhüllende EH1 gegebenen Verlauf der Meßsignale CI0 bis CI2 hingegen geschlossen werden, daß der Lichtwellenleiter LW1 von seiner idealen Position in der Darstellung nach Figur 1 etwas nach oben räumlich verschoben im Bändchen BL1 liegt. Dies bedeutet, daß bei einer sehr exakt (daß heißt mit gleichbleibendem Abstand) erfolgenden Anordnung der Sendeelemente TE0 bis TEm innerhalb der Sendezeile SZ aufgrund der gemessenen einzelnen Empfangssignale je Lichtwellenleiter eine Aussage über dessen exakte oder nicht exakte Positionierung innerhalb des Bändchens BL1 gemacht werden kann. Dies setzt allerdings voraus, daß mehr Sendeelemente vorhanden sind als Lichtwellenleiter, das heißt, daß gilt:
m = kn mit k > 1 und ganzzahlig.

Durch die dargestellte zeitliche Auflösung (aufeinanderfolgende Aktivierung der Sendeelemente TE0 bis TEm in der Art einer "Lichterkette") ergibt sich somit praktisch eine sendeseitige Ortsunabhängigkeit hinsichtlich der Strahlungsfelder TF0 bis TFm in Bezug auf die Lichtwellenleiter. Die Strahlungsfelder können also weitgehend willkürlich gewählt werden und müssen nicht in einer spezifischen, räumlichen Zuordnung zu den Kernen der Lichtwellenleiter-Fasern liegen. Letzteres ist im praktischen Betrieb wegen der unvermeidlichen Toleranzen hinsichtlich der Lage der Kerne der Lichtwellenleiter-Fasern auch kaum möglich. Entscheidend ist dabei, wie bereits erwähnt, stets, daß k wesentlich größer gewählt wird als 1, vorzugsweise zwischen 3 und 6. Die zeitliche Auflösung auf der Empfangsseite entspricht aufgrund des sendeseitigen Durchlaufs der "Lichterkette" somit einer Ortsauflösung hinsichtlich der räumlichen Lage der Kerne der Lichtwellenleiter-Fasern. Eine sendeseitige exakte, eindeutige Ausrichtung bzw. Zuordnung der Sende-Strahlungsfelder auf die Einkoppelabschnitte der gekrümmt verlaufenden Lichtwellenleiter ist dann gerade nicht mehr notwendig. Denn aus der örtlichen Leistungsverteilung I kann vielmehr im nachhinein ohne Vorwissen über die sendeseitigen Einkoppelverhältnisse so viel Information gewonnen werden, daß zu jedem einzelnen Lichtwellenleiter vielfältige Aussagen z.B. zu seiner örtlichen Lage, zu seinen Übertragungs-Kenngrößen, usw. in eindeutiger Weise selektiv getroffen werden können. So kennzeichnen z.B. die lokalen Maxima (M1 - M7) der Leistungsverteilung I ungefähr die Lage der Kerne der Lichtwellenleiter LW1 - LWn mit n = 7. Dadurch ist auch eine automatische Erkennung der Anzahl und der genauen Lage der einzelnen Faser-Kerne (Faseridentifizierung) möglich. Dies gilt auch für eine beliebige Anordnung der Fasern innerhalb der Mehrfaserstruktur des jeweiligen Bändchens.

Neben der "Feinauflösung" der Lage der Kerne der Lichtwellenleiter-Fasern ergibt sich durch die Erfindung weiterhin die Möglichkeit, die Qualität der Ausrichtung der Faserenden im Bereich der Mehrfachspleißeinrichtung MS1 zu beurteilen. So zeigt bei der vereinfachenden Annahme identischer Sendepegel und idealer Einkopplung der Verlauf der Einhüllenden EH1, EH2 und EH3, daß die zugehörigen Lichtwellenleiterpaare LW1/LW1*, LW2/LW2* und LW3/LW3* relativ gut aufeinander ausgerichtet sind. Ähnliches gilt für die Einhüllende EH5 mit der Lichtwellenleiter-Kombination LW5/LW5* und bezüglich der Einhüllenden EH7 mit der Lichtwellenleiter-Kombination LW7/LW7*. Die Maxima M1, M 2, M3, M5 und M7 der Einhüllenden EH1, EH2, EH3, EH5 und EH7 liegen also oberhalb eines Toleranz- bzw. Schwellwertes, der als Kriterium für ein akzeptables Spleißergebnis festgelegt werden kann.

Dagegen zeigen die Lichtwellenleiter Kombinationen LW4/ LW4* (repräsentiert durch die Einhüllende EH4) und LW6/ LW6* (repräsentiert durch die Einhüllende EH6) eine sehr mangelhafte Ausrichtung innerhalb der Mehrfachspleißeinrichtung MS1. Es ist somit für eine Bedienungsperson aufgrund der Beobachtung der Anzeigeeinrichtung DSP1 ohne weiteres möglich, zu entscheiden, ob eine Nachjustierung innerhalb der Spleißeinrichtung MS1 durchgeführt werden soll bzw. ob ein bereits erfolgter Spleiß (zum Beispiel durch Verschweißen) wegen mangelhafter Qualität erneut durchgeführt werden muß, weil zum Beispiel die Einhüllenden EH4 und EH6 mit ihren Maxima M4 und M6 unterhalb des bestimmten Toleranzwertes liegen. Da der Wirkungsgrad der sendeseitigen Lichteinkopplung und der empfangsseitigen Auskopplung im allgemeinen für die einzelnen Lichtwellenleiter unterschiedlich und nicht bekannt ist, ist eine Aussage über die Ausrichtung der sich gegenüberstehenden Lichtwellenleiter im allgemeinen direkt nur schwierig oder gar nicht möglich. Durch ein Verschieben der Enden der Lichtwellenleiter unter gleichzeitiger Beobachtung der empfangenen Intensitätspegel (bei konstanter sendeseitiger Einkopplung) kann allerdings Aufschluß über die Ausrichtung der Lichtwellenleiter-Enden gewonnen werden, was einer Relativmessung entspricht.

Aus diesem Grund sind die Sender und der Empfänger gemäß Figur 1 und in den entsprechenden Ausführungsformen gemäß den Figuren 2 mit 5 zweckmäßigerweise so aufgebaut, insbesondere ihre Sendeleistung und ihre Empfängerempfindlichkeit sind so ausgelegt, daß die Meßeinrichtung ME für unterschiedlich eingefärbte Einzelfasern und damit für unterschiedliche Koppelfaktoren innerhalb des Faserbändchens arbeitet. Die damit verbundenen unterschiedlichen Ein- und Auskoppelwirkungsgrade für verschiedene Lichtwellenleiter führen zu unterschiedlichen Empfangspegeln.

Nochmals sei betont, daß für den Fall m > n, insbesondere m >> n, die Einrichtung unabhängig von der genauen Lage der einzelnen Fasern innerhalb der Bändchenstruktur und unabhängig von der Anzahl der einzelnen Fasern (Dies gilt nicht für den Fall m = n, d.h. Anzahl der Lichtwellenleiter = Anzahl der Sendeelemente) arbeitet.

Auf diese Weise ist die Einrichtung in der Lage, automatisch die genaue Lage und die Anzahl der einzelnen Lichtwellenleiter zu erkennen. Dies gilt vorzugsweise für m >> n bei der Ausführung gemäß Figur 2 und ganz besonders für die nachfolgenden Ausführungen gemäß den Figuren 3 mit 5.

Wenn hingegen die Zahl der Sendeelemente TE0 bis TEm gleich der Zahl der Lichtwellenleiter LW1 bis LWn gewählt wird, das heißt, wenn m = n ist, dann ergibt sich je Lichtwellenleiter nur ein Meßwert. Analog dem im Zusammenhang mit Figur 2 erläuterten Beispiel wäre etwa bei Wegfall des Sendeelementes TE0 und des Sendeelementes TE2 für den Lichtwellenleiter LW1 nur das Sendeelement TE1 vorhanden. Dieses Sendeelement TE1 könnte dementsprechend auch nur ein Empfangssignal oder einen Empfangssignalwert CI1 beim Lichtwellenleiter LW1* erzeugen. Dieser Empfangswert CI1 ist im vorliegenden Beispiel als ausgezogene Linie dargestellt und mit CI1 bezeichnet. Für die übrigen Lichtwellenleiter gilt dies analog, wobei jeweils die mittels ausgezogener Linien angegebenen Empfangspegel diesen einen, dann erhältlichen, Meßwert repräsentieren. Es zeigt sich, daß aufgrund einer derartigen Messung zwar noch eine Beurteilung der Güte des Spleißvorgangs in der Mehrfach-spleißeinrichtung MS1 möglich ist (das heißt, man würde finden, daß die Lichtwellenleiter LW4/LW4* und LW6/LW6* nicht optimal ausgerichtet sind) jedoch wäre eine Beurteilung der Lage der einzelnen Lichtwellenleiter, insbesondere deren Kerne, innerhalb des Bändchens, also zum Beispiel eine Beurteilung hinsichtlich der Symmetrie oder größerer Toleranzabweichungen, nicht möglich bzw. weit weniger aussagekräftig.

Die beiden Bandleitungen BL1 und BL2 können in der Mehrfach-Spleißeinrichtung MS1 in Figur 1 mit Hilfe zweier Stellglieder SG1 und SG2 als Stellmittel relativ zueinander verschoben und aufeinander ausgerichtet werden. Dies kann eine Bedienperson beispielsweise mit Hilfe zweier in Figur 1 strichpunktiert dargestellter Handsteuerungen H1 und H2 manuell durchführen. Mit der Handsteuerung H1 kann die Bedienperson das Stellglied SG1 mittels eines Steuersignals SS1 über eine Steuerleitung SL1 betätigen. Entsprechend dazu läßt sich mit der Handsteuerung H2 das Stellglied SG2 mittels eines Steuersignals SS2 über eine Steuerleitung SL2 verfahren. Vorteilhaft kann auch eine Recheneinheit CPU diesen Ausrichtvorgang übernehmen, indem sie die in den Meßwertspeicher MEM zeitlich nacheinander einlaufenden Datensätze DS3 für die Gesamt-Intensitätsverteilungen I durchsucht und überprüft, ob alle Maxima M1 bis M7 oberhalb eines Toleranzwertes liegen. Die Recheneinheit CPU bricht dann den Verschiebevorgang sowie den Einkoppelzyklus ab, indem sie ein Steuersignal SS3 über eine Steuerleitung SL3 an die Ansteuervorrichtung ASV1 überträgt und diese anweist, den Multiplexbetrieb für die Sendeelemente TE1 bis TEm zu beenden.

Vorstehend wurde der Betrieb der Meßeinrichtung ME im Zeitmultiplexverfahren beschrieben. Die Meßeinrichtung ME von Figur 1 kann jedoch auch zusätzlich oder insbesondere unabhängig hiervorn in anderer Weise betrieben werden. Zur Erzeugung unterscheidbarer Sendesignale wird sie um eine Modulationseinrichtung M0 im optischen Sender OT1 ergänzt. Diese Modulationseinrichtung M0 ist in Figur 1 strichpunktiert dargestellt und mit der Ansteuervorrichtung ASV1 über eine Leitung ML verbunden. Die Modulationseinrichtung M0 steuert die Ansteuervorrichtung ASV1 mit einem Steuersignal MS über die Leitung ML so an, daß diese gleichzeitig mehrere oder alle Sendeelemente TE0 bis TEm mittels der Steuersignale AS0 bis ASm aktiviert. Dabei werden deren Sende-Strahlungsfelder mit unterschiedlicher Modulation bzw. Sendefrequenzen gleichzeitig (und nicht im Zeitmultiplexbetrieb) in die zu messenden Lichtwellenleiter LW1 bis LWn eingekoppelt. Zum Beispiel kann jedem Sendeelement TE0 bis TEm eine eigene Frequenz oder Modulation zugeordnet werden, d.h. es sind für das Beispiel nach Figur 2 einundzwanzig verschiedene Frequenzen oder Modulationen erforderlich. Das durch das Empfangselement GLE von allen Lichtwellenleitern gleichzeitig aufgefangene Signal enthält nun, entsprechend den ausgekoppelten optischen Leistungen, unterschiedlich große Anteile der verschiedenen Frequenzen oder Modulationen der Sendedioden. Mittels einer strichpunktiert eingezeichneten Filtereinheit oder eines Demodulators FU werden daraus die einzelnen Pegel gewonnen, die dann getrennt (selektiv) der Digitalisiereinheit SUH zugeführt und analog der bereits beschriebenen Auswertung weiter verarbeitet werden. Im Falle unterschiedlicher Sendefrequenzen kann FU z.B. eine entsprechende Anzahl unterschiedlicher Filter enthalten oder im Modulationsfall entsprechende Demodulatoren. Das Verfahren bietet gegenüber dem reinen Zeitmultiplex den Vorteil, daß die Meßwerte aller Fasern gleichzeitig parallel zur Verfügung gestellt werden können.

In den Figuren 3 bis 5 sind die aus den Figuren 1 und 2 unverändert übernommenen Elemente jeweils mit den gleichen Bezugszeichen versehen. Die Figuren 3 bis 5 zeigen drei weitere Möglichkeiten, wie unterscheidbare Sende-Strahlungsfelder jeweils mittels Sende-Koppeleinrichtungen SK2 bis SK4 als Einkoppelmittel in die zu messenden Lichtwellenleiter eingekoppelt werden können.

In Figur 3 ist schematisch im optischen Sender OT3 der Sende-Koppeleinrichtung SK2 nur eine einzige Lichtquelle LA1, vorzugsweise ein Laser, vorgesehen, der einen Lichtstrahl LI auf einen um eine Rotationsachse RA rotierenden Spiegel RS lenkt. Dessen Rotationsrichtung ist in Figur 3 mit dem Pfeil RV angegeben. Der rotierende Spiegel RS weist mehrere, vorzugsweise zwischen 10 und 60 Reflexionsflächen RF1 bis RFk auf, d.h., deren Zahl ist größer als die Zahl der Lichtwellenleiter. Der Lichtstrahl LI trifft in Figur 3 beispielsweise auf die Reflexionsfläche RFk und wird durch diese mit seinem abgelenkten Strahl LS0 auf den Einkoppelabschnitt TC1 des Lichtwellenleiters LW1 gelenkt. Durch die Rotationsbewegung der Reflexionsfläche RFk verändert sich deren Ablenkwinkel AS bezüglich der feststehenden Lichtquelle LA1, so daß sukzessive, zeitlich nacheinander die Lichtwellenleiter LW1 bis LWn mit Lichtstrahlen LS0 bis LSm beleuchtet werden. Durch die Strahlablenkung des Lichtstrahles LI überstreichen die abgelenkten Strahlen LS0 bis LSm eine Fläche SA. Die Schwenkbewegung der reflektierten Lichtstrahlen LS0 bis LSm ist in Figur 3 durch den Pfeil SV veranschaulicht.

Die Rotationsbewegung des Spiegels RS kann zweckmäßigerweise mit einer Betätigungsvorrichtung BV1 gesteuert werden. Die Kontrolle über die Rotationsbewegung ist dabei mit Hilfe eines Wirkpfeils WP1 angedeutet. Die Betätigungsvorrichtung BV1 wird über eine Ansteuervorrichtung ASV2 bedient. Diese weist die Betätigungsvorrichtung BV1 mittels eines Signals DS7 über eine Leitung DL7 an.

Als Strahlablenkvorrichtung kann anstelle des rotierenden Spiegels RS auch ein beweglicher Spiegel verwendet werden. Dabei handelt es sich zweckmäßigerweise um eine periodische, lineare Bewegung oder Drehbewegung. Als Antriebselemente hierfür kommen z.B. in Betracht: Eigenresonanzscanner (Torsionsstabscanner, Torsionsbandscanner), Galvanometerscanner und piezoelektrische Scanner. Diese Elemente haben einen unterschiedlichen Betriebsfrequenzbereich. Eigenresonanzscanner haben eine feste Frequenz. Bei Galvanometer-Scannern und piezoelektrischen Scannern ist die Frequenz variabel. Die Elemente unterscheiden sich weiterhin in den Wellenbildern, mit denen eine Abtastung möglich ist. Die störungsanfällige, mechanische Spiegelbewegung kann vorteilhaft durch Verwendung eines akusto/elektro-optischen Modulators als Ablenkelement vermieden werden.

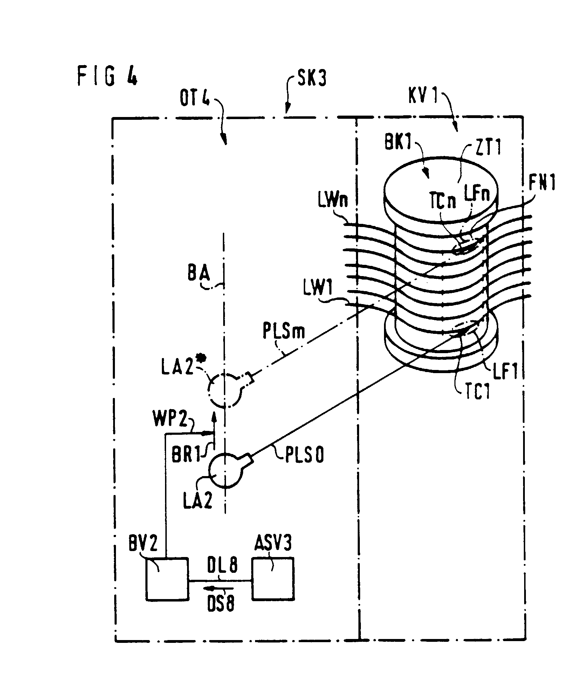

Figur 4 zeigt einen weiteren optischen Sender OT4, mit dessen Hilfe zeitlich nacheinander Meßsignale in die Einkoppelabschnitte TC1 bis TCn der Lichtwellenleiter LW1 bis LWn der Bandleitung BL1 eingekoppelt werden können. Dazu wird mit Hilfe einer Betätigungsvorrichtung BV2 eine Lichtquelle LA2 in Richtung eines Pfeiles BR1 quer zur Längsachse der feststehenden Bandleitung BL1 bzw. deren Lichtwellenleiter LW1 bis LWn verschoben. Das Verschieben der Lichtquelle LA2 durch die Betätigungsvorrichtung BV2 ist in Figur 4 durch einen Wirkpfeil WP2 angedeutet. Die Ansteuerung der Betätigungsvorrichtung BV2 übernimmt eine Ansteuervorrichtung ASV3 mittels eines Steuersignals DS8 über eine Steuerleitung DL8. Die Lichtquelle LA2, vorzugsweise eine Laserdiode, oder ein LED-Element, koppelt während der kontinuierlichen Schiebebewegung entlang des Pfeiles BR1 sukzessive, zeitlich nacheinander Lichtstrahlen PLS0 bis PLSm in die Einkoppelabschnitte TC1 bis TCn der zu messenden Lichtwellenleiter LW1 bis LWn kontinuierlich ein. Die Position der Lichtquelle am Ende der Verschiebebewegung ist in Figur 3 strichpunktiert dargestellt und mit LA2* bezeichnet.

Anstelle der Verschiebebewegung der Lichtquelle LA2 gegenüber der feststehenden Bandleitung BL1 im Biegekoppler BK1 ist auch vorteilhaft eine beliebige Relativbewegung zwischen der Bandleitung BL1 und der Lichtquelle LA2 möglich.

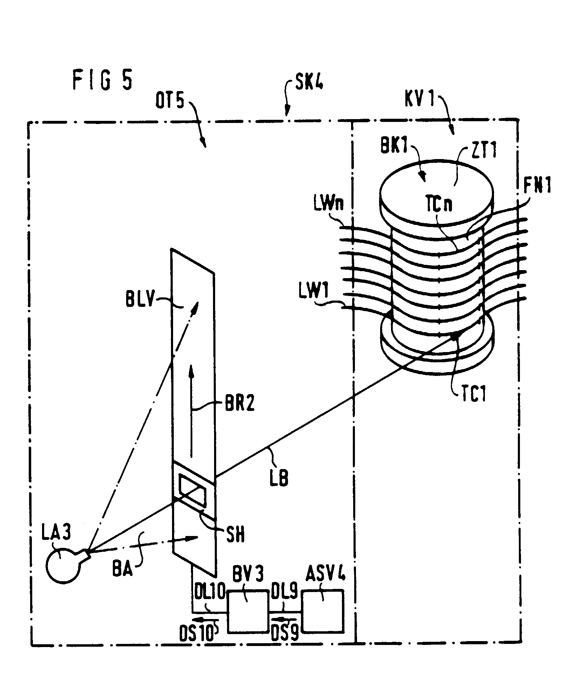

Figur 5 zeigt eine weitere Sende-Koppeleinrichtung SK4 mit einem optischen Sender OT5, dem eine Lichtquelle LA3 und eine zusätzliche Blendenvorrichtung BLV zugeordnet ist. Die Blendenvorrichtung BLV weist als Blende bzw. Öffnung einen Durchlaßschlitz (Schlitzblende) SH auf, der sich in Richtung von BR2 quer zur Längsachse der Bandleitung BL1 (d.h. deren Lichtwellenleiter LW1 bis LWn) verschieben läßt. Durch diesen Durchlaßschlitz SH kann jeweils nur ein schmaler Lichtstrahl LB aus dem breitflächigen Strahlungsfeld BA der Lichtquelle LA3 hindurchtreten. Figur 5 stellt beispielhaft den Moment dar, während dem der Lichtstrahl LB den Einkoppelabschnitt TC1 des Lichtwellenleiters LW1 beleuchtet und in diesen eingespeist wird, hingegen alle übrigen Lichtwellenleiter LW2 bis LWn von der Blendenvorrichtung BLV abgeschaltet sind. Die Schlitzblende SH wird daraufhin jeweils zeitlich nacheinander entlang des Pfeiles BR2 so verschoben und positioniert, daß der Lichtstrahl LB kontinuierlich in die übrigen, zu untersuchenden Lichtwellenleiter LW2 bis LWn selektiv eingekoppelt wird. Die Blendenvorrichtung BLV kann mit Hilfe einer Betätigungsvorrichtung BV3 mittels eines Steuersignals DS10 über eine Steuerleitung DL10 bedient werden. Die Ansteuerung der Betätigungsvorrichtung BV3 erfolgt dabei mit Hilfe einer Ansteuervorrichtung ASV4, die ein Signal DS9 über die Leitung DL9 an die Betätigungsvorrichtung BV3 übermittelt.

Die Blendenvorrichtung BLV kann vorteilhaft auch in Form einer beweglichen Scheibe ausgebildet sein, die einen Durchlaßschlitz aufweist und sich in geeignete Einkoppel-Positionen verdrehen läßt. (chopper-Scheibe). Ebenso ist es möglich, anstelle einer mechanischen Blende bzw. Öffnung in der Blendenvorrichtung BLV eine elektro-optische Blende vorzusehen. Dafür eignen sich insbesondere sogenannte LCS-Elemente (Liquid crystall shutter), die beispielsweise von der Firma Displaytech Inc. of Boulder Colorado, angeboten werden.

Mit der erfindungsgemäßen Meßeinrichtung nach den Figuren 1 und 2 und ihren modifizierten optischen Sendern nach den Figuren 3 bis 5 können die optischen übertragungskenngrößen mehrerer Lichtwellenleiter selektiv in einfacher Weise unter gleichzeitiger Reduzierung der Meßzeit pro Lichtwellenleiter mit hoher Genauigkeit und Empfindlichkeit bestimmt werden. Für eine exakte Selektivmessung nach den Figuren 1 und 2 ist die Anzahl m der Sendeelemente zweckmäßig mindestens gleich 1, vorzugsweise zwischen 2 und 5 mal so groß zu wählen wie die Anzahl n der zu messenden Lichtwellenleiter. Der günstigste Fall für eine sendeseitige, selektive Lichteinkopplung in die zu messenden Lichtwellenleiter ergibt sich für die optischen Sende-Koppeleinrichtungen bzw. Sender der Figuren 3 bis 5. Dort überstreicht jeweils ein Lichtstrahl die zu messenden Lichtwellenleiter kontinuierlich, so daß die Intensitätsverteilung in den zu messenden Lichtwellenleitern ebenfalls kontinuierlich aufgenommen, und damit besonders exakt gemessen werden kann.

Bei den Figuren 1 bis 5 kann die Breite des auf die Bandleitung treffenden Leuchtflecks auch so klein gewählt werden, daß nicht in jeder Position Licht in den Kern einer Lichtwellenfaser eingekoppelt wird.

Die Ausführungsbeispiele der Figuren 1 bis 5 bezogen sich beispielhaft auf die Anwendung der Erfindung bei Lichtwellenleiter-Bändchen. Selbstverständlich ist es auch möglich, mit der erfindungsgemäßen Meßeinrichtung die optischen Übertragungsgrößen mehrerer Lichtwellenleiter selektiv zu bestimmen, die lose oder in sonstiger Weise gebündelt vorliegen können. Dabei spielt es keine Rolle, ob die zu vermessenden Lichtwellenleiter beliebig oder in einer geordneten Struktur angeordnet sind, so lange sie sich nur nicht gegenseitig abschatten.

## Patentansprüche

1. Einrichtung (ME) für Messungen an mehreren Lichtwellenleitern (LW1 bis LWn) mit einem optischen Sender (OT1), der eine kleinere oder eine größere Anzahl an Sendeelementen (TE0 bis TEm) aufweist als die Anzahl der zu messenden Lichtwellenleiter (LW1 bis LWn) und der mit Hilfe einer zugehörigen Koppelvorrichtung, die als Biegekoppler (BK1) ausgebildet ist, um den jeder zu messende Lichtwellenleiter (LW1 bis LWn) unter Bildung eines frei wählbaren, gekrümmten Einkoppelabschnitts (TC1 bis TCn) bogenförmig führbar ist, sendeseitig an die jeweils zu messenden Lichtwellenleiter (LW1 bis LWn) zur Einkoppelung von optischen Meßsignalen (I0 bis Im) ankoppelbar ist, wobei die Sendeelemente (TE0 bis TEm) bezüglich der Lichtwellenleiter (LW1 bis LWn) im Koppelbereich des sendeseitigen Biegekopplers (BK1) derart angeordnet sind und der optische Sender (OT1) derart ausgebildet ist, daß mit Hilfe mindestens eines Sendeelementes (TE0 bis TEm) jeweils ein Sende-Strahlungsfeld (TEo bis TFm) mit einem Leuchtfleck (LF0 bis LFm) erzeugt wird, dieser Leuchtfleck zeitlich nacheinander die Einkoppelabschnitte (TC1 bis TCn) der zu messenden Lichtwellenleiter (LW1 bis LWn) entlangstreicht und dabei jeweils ein Meßsignal in den jeweiligen Lichtwellenleiter (LW1 bis LWn) selektiv unterscheidbar einkoppelt, sowie mit einem optischen Empfänger (OR1), der mit Hilfe einer zugehörigen Koppelvorrichtung (KV2), die als Biegekoppler (BK2) ausgebildet ist, um den jeder zu messende Lichtwellenleiter (LW1 bis LWn) unter Bildung eines frei wählbaren, gekrümmten Auskoppelabschnitts (RC1 bis RCn) bogenförmig führbar ist, empfangsseitig an die zu messenden Lichtwellenleiter (LW1 bis LWn) zur Auskoppelung von Empfangs-Strahlungsfeldern sowie deren optischer Meßsignale (I1 bis Im) ankoppelbar ist, und der zur Aufnahme dieser ausgekoppelten Empfangs-Strahlungsfelder (RF0 bis RFm) mindestens ein Empfangselement (BLE) aufweist, das im Koppelbereich dieses empfangsseitigen Biegekopplers (BK2) so ausgerichtet und ausgebildet ist, daß dieses Empfangselement (GLE) die aus den Auskoppelabschnitten (RC1 bis RCn) der zu messenden Lichtwellenleiter (LW1 bis LWn) ausgekoppelten Empfangs-Strahlungsfelder (RF0 bis RFm) erfaßt und daraus unterscheidbare Meßsignale (CI0 bis CIm) erzeugt, wobei diese Meßsignale in einer dem Empfangselement (GLE) zugeordneten Auswerteeinrichtung (AE1) getrennt auswertbar sind.

2. Einrichtung nach Anspruch 1,
**dadurch gekennzeichnet,**
daß die zu messenden Lichtwellenleiter (LW1 bis LWn) mechanisch miteinander verbunden sind, vorzugsweise in Form einer Bandleitung (BL1, BL2).

3. Einrichtung nach einem der vorhergehenden Ansprüche,
**dadurch gekennzeichnet,**
daß die Lichtwellenleiter (LW1 bis LWn) im Koppelbereich des jeweiligen Biegekopplers (BK1, BK2) beliebig angeordnet sind.

4. Einrichtung nach einem der vorhergehenden Ansprüche,
**dadurch gekennzeichnet,**
daß die Sendeelemente (TE0 bis TEm) in einer Zeilenstruktur oder in einer Array-Struktur angeordnet sind.

5. Einrichtung nach einem der vorhergehenden Ansprüche,
**dadurch gekennzeichnet,**
daß im optischen Sender (OT1) eine Ansteuervorrichtung (ASV1) zum Ansteuern der Sendeelemente (TE0 bis TEm) im Zeitmultiplexbetrieb vorgesehen ist.

6. Einrichtung nach einem der vorhergehenden Ansprüche
**dadurch gekennzeichnet,**
daß Einkoppelmittel derart vorgesehen sind, daß jeweils das Sende-Strahlungsfeld (TF0 bis RFm) mindestens eines Sendeelementes (TE0 bis TEm) zeitlich nacheinander die Einkoppelabschnitte (TC0 bis TCn) der Lichtwellenleiter (LW1 bis LWn) im Koppelbesreich (BK1) mit seinem Leuchtfleck überstreicht.

7. Einrichtung nach Anspruch 6,
**dadurch gekennzeichnet,**
daß eine Strahlablenkvorrichtung für die Bewegung des Sende-Strahlungsfeldes (LS0) vorgesehen ist (Figur 3).

8. Einrichtung nach Anspruch 7,
**dadurch gekennzeichnet,**
daß als Strahlablenkvorrichtung ein beweglicher Spiegel (RS) vorgesehen ist.

9. Einrichtung nach Anspruch 7,
**dadurch gekennzeichnet,**
daß als Strahlablenkvorrichtung akusto/elektro-optische Mittel, insbesondere akusto-optische Modulatoren, vorgesehen sind.

10. Einrichtung nach einem der Ansprüche 1 bis 6,
**dadurch gekennzeichnet,**
daß im optischen Sender (OT1) eine Betätigungsvorrichtung (BV2) zum Bewegen mindestens eines Sendeelementes (LA2) relativ zu den zu messenden Lichtwellenleitern (LW1 bis LWn) derart vorgesehen ist, daß dessen Sende-Strahlungsfeld (PLS1) die Einkoppelabschnitte (TC1 bis TCn) der zu messenden Lichtwellenleiter (LW1 bis LWn) im Koppelbereich zeitlich nacheinander mit seinem Leuchtfleck (LF0 bis LFm) jeweils beleuchtet.

11. Einrichtung nach einem der Ansprüche 1 bis 6,
**dadurch gekennzeichnet,**
daß im optischen Sender (OT1) eine Blendenvorrichtung (BLV) im Sende-Strahlungsfeld (BLV) mindestens eines Sendeelementes (LA3) angeordnet ist, und daß diese Blendenvorrichtung (BLV) eine Öffnung derart aufweist, daß der durch diese jeweils hindurchtretende Anteil des Sende-Strahlungsfeldes (BLV) zeitlich nacheinander nur in jeweils einen Teil der zu messenden Lichtwellenleiter (LW1 bis LWn) einkoppelbar ist.

12. Einrichtung nach Anspruch 11,
**dadurch gekennzeichnet,**
daß in der Blendenvorrichtung (BLV) als Öffnung ein mechanisch beweglicher Durchlaßschlitz (SH) vorgesehen ist.

13. Einrichtung nach Anspruch 12,
**dadurch gekennzeichnet,**
daß in der Blendenvorrichtung (BLV) eine elektro-optische Öffnung vorgesehen ist.

14. Einrichtung nach einem der vorhergehenden Ansprüche,
**dadurch gekennzeichnet,**
daß der optische Sender (OT1) zur Erzeugung unterscheidbarer Sende-Strahlungsfelder (TF0 bis TFm) eine Modulationseinrichtung (Mo) aufweist.

15. Einrichtung nach einem der vorhergehenden Ansprüche,
**dadurch gekennzeichnet,**
daß zwischen den Sendeelementen (TE1 bis TEm) des optischen Senders (OT1) und den zu messenden Lichtwellenleitern (LW1 bis LWn) im Koppelbereich eine Abbildungsoptik (A0) angeordnet ist.

16. Einrichtung nach einem der vorhergehenden Ansprüche,
**dadurch gekennzeichnet,**
daß der Leuchtfleck entlang des jeweiligen Einkoppelabschnittes (TC1 bis TCn) des zu messenden Lichtwellenleiters (LW1) eine Ausdehnung von mindestens der halben Dicke des Lichtwellenleiter-Bändchens (B11) aufweist.

17. Einrichtung nach einem der vorhergehenden Ansprüche,
**dadurch gekennzeichnet,**
daß der Leuchtfleck (LF0 bis LFm) im Koppelbereich entlang der Einkoppelabschnitte (TC1 bis TCn) der zu messenden Lichtwellenleiter (LW1 bis LWn) eine Breite aufweist, die höchstens dem Abstand der Achsen zweier benachbarter Lichtwellenleiter entspricht.

18. Einrichtung nach einem der vorhergehenden Ansprüche,
**dadurch gekennzeichnet,**
daß im optischen Sender (OT1) als Sendeelemente (TE0 bis TEm) Leuchtdioden vorgesehen sind.

19. Einrichtung nach einem der Ansprüche 1 bis 17,
**dadurch gekennzeichnet,**
daß im optischen Sender (OT1) als Sendeelement (LA1) ein Laser vorgesehen ist.

20. Einrichtung nach einem der vorhergehenden Ansprüche,
**dadurch gekennzeichnet,**
daß Seitenblenden (BD1 bis BDn) vorgesehen sind, und daß diese derart angeordnet sind, daß sie eine Entkopplung benachbarter Sende-Strahlungsfelder (TF0 bis TFm) ergeben.

21. Einrichtung nach einem der vorhergehenden Ansprüche,
**dadurch gekennzeichnet,**
daß Stellmittel (SG1, SG2) zum Ausrichten der zu messenden Lichtwellenleiter (LW1 bis LWn / LW1* bis LWn*) in einer Mehrfach-Spleißeinrichtung (MS1) vorgesehen sind.

22. Einrichtung nach einem der vorhergehenden Ansprüche,
**dadurch gekennzeichnet,**
daß in der Auswerteeinrichtung (AE1) eine Recheneinheit (CPU) sowie ein Meßwertspeicher (MEM) vorgesehen sind, und daß diese Recheneinheit (CPU) derart ausgebildet ist, daß sie die von mindestens einem Empfangselement (GLE) aufgenommenen Meßsignale (DS2) derart funktional miteinander verknüpft, daß die den zu messenden Lichtwellenleitern (LW1 bis LWn) zugehörigen optischen Übertragungskenngrößen selektiv auswertbar sind.

23. Einrichtung nach einem der vorhergehenden Ansprüche,
**dadurch gekennzeichnet,**
daß in der Auswerteeinrichtung (AE1) eine Anzeigevorrichtung (DSP1) für die erzeugten Meßsignale (CI0 bis CIm) vorgesehen ist.

24. Einrichtung nach einem der vorhergehenden Ansprüche,
**dadurch gekennzeichnet,**
daß die Einrichtung (ME) Bestandteil eines Lichtwellenleiter-Spleißgerätes ist.

25. Einrichtung nach einem der Ansprüche 1 bis 23,
**dadurch gekennzeichnet,**
daß die Einrichtung (ME) Bestandteil eines Lichtwellenleiter-Dämpfungsmeßgerätes ist.

26. Verfahren zum Messen optischer Übertragungskenngrößen von mehreren Lichtwellenleitern (LW1 bis LWn), wobei ein optischer Sender (OT1), der eine kleinere oder eine größere Anzahl an Sendeelementen (TE0 bis TEm) aufweist als die Anzahl der zu messenden Lichtwellenleiter (LW1 bis LWn), zur Einkoppelung von optischen Meßsignalen (I0 bis Im) an die jeweils zu messenden Lichtwellenleiter (LW1 bis LWn) mit Hilfe einer zugehörigen Koppelvorrichtung (KV1), die als Biegekoppler (BK1) ausgebildet ist, um den jeder zu messende Lichtwellenleiter (LW1 bis LWn) unter Bildung eines frei wählbaren, gekrümmten Einkoppelabschnitts (TC1 bis TCn) bogenförmig geführt wird, sendeseitig angekoppelt wird, wobei mit Hilfe mindestens eines Sendeelements (TE0 bis TEm) jeweils ein Sende-Strahlungsfeld (TF0 bis TEm) mit einem Leuchtfleck (LF0 bis LFm) im Koppelbereich des sendeseitigen Biegekopplers (BK1) erzeugt, mit diesem Leuchtfleck (LF0 bis LFm) zeitlich nacheinander den Einkoppelabschnitten (TC1 bis TCn) der zu messenden Lichtwellenleiter (LW1 bis LWn) entlanggestrichen und dabei ein Meßsignal (I0 bis Im) in den jeweiligen zu messenden Lichtwellenleiter (LW1 bis LWn) selektiv unterscheidbar eingekoppelt wird, wobei ein optischer Empfänger (OR1) mit Hilfe einer zugehörigen Koppelvorrichtung (KV2), die als Biegekoppler (BK2) ausgebildet ist, um den jeder zu messende Lichtwellenleiter (LW1 bis LWn) unter Bildung eines frei wählbaren, gekrümmten Auskoppelabschnitts (RC1 bis RCn) bogenförmig geführt wird, empfangsseitig an die zu messenden Lichtwellenleiter (LW1 bis LWn) zur Auskoppelung von Empfangs-Strahlungsfeldern sowie deren optischer Meßsignale (I1 bis Im) angekoppelt wird, wobei die Empfangs-Strahlungsfelder (RF0 bis RFm) im optischen Empfänger (OR1) mit Hilfe mindestens eines Empfangselementes (GLE), das im Koppelbereich des empfangsseitigen Biegekopplers (BK2) die aus den Auskoppelabschnitten (RC1 bis RCn) der zu messenden Lichtwellenleiter (LW1 bis LWn) ausgekoppelten Empfangs-Strahlungsfelder (RF0 bis RFm) erfaßt und daraus unterscheidbare Meßsignale (CI0 bis CIm) erzeugt, aufgenommen werden und wobei diese Meßsignale (CI0 bis CIm) in einer dem Empfangselement (GLE) zugeordneten Auswerteeinrichtung (AE1) getrennt ausgewertet werden.

27. Verfahren nach Anspruch 26,
**dadurch gekennzeichnet,**
daß die Sende-Strahlungsfelder (TF0 bis TFn) mit unterschiedlichen Signalen moduliert werden.

28. Verfahren nach einem der Ansprüche 26 oder 27,
**dadurch gekennzeichnet,**
daß als Sende-Strahlungsfelder (TF0 bis TFm) solche mit unterschiedlichen Frequenzen verwendet werden.

## Claims

1. Device (ME) for measuring a plurality of optical fibres (LW1 to LWn), having an optical transmitter (OT1) which has a smaller or a larger number of transmit elements (TE0 to TEm) than the number of optical fibres (LW1 to LWn) to be measured and which, for the purpose of launching optical measuring signals (I0 to Im), can be coupled at the transmitting end to the optical fibres (LW1 to LWn) respectively to be measured with the aid of an associated coupling device, which is constructed as a bending coupler (BK1) around which it is possible to guide arcuately each of the optical fibres (LW1 to LWn) to be measured, forming a freely selectable, curved launching section (TC1 to TCn) in the process, the transmit elements (TE0 to TEm) being arranged with respect to the optical fibres (LW1 to LWn) in the coupling region of the bending coupler (BK1) at the transmitting end, and the optical transmitter (OT1) being constructed, in such a way that in each case one transmit radiation field (TF0 to TFm) with a light spot (LF0 to LFm) is generated with the aid of at least one transmit element (TE0 to TEm), and this light spot passes sequentially in time along the launching sections (TC1 to TCn) of the optical fibres (LW1 to LWn) to be measured and respectively launches a measuring signal into the respective optical fibre (LW1 to LWn) in a selectively distinguishable way, and having an optical receiver (OR1) which, for the purpose of outputting receive radiation fields and their optical measuring signals (I1 to Im), can be coupled at the receiving end to the optical fibres (LW1 to LWn) to be measured with the aid of an associated coupling device (KV2), which is constructed as a bending coupler (BK2) around which it is possible to guide arcuately each of the optical fibres (LW1 to LWn) to be measured, forming a freely selectable, curved output section (RC1 to RCn) in the process, and which, for the purpose of detecting these output receive radiation fields (RF0 to RFm), has at least one receive element (GLE) which is aligned, and constructed, in the coupling region of this receiving-end bending coupler (BK2) such that this receive element (GLE) detects the receive radiation fields (RF0 to RFm) output from the output sections (RC1 to RCn) of the optical fibres (LW1 to LWn) to be measured and generates distinguishable measuring signals (CI0 to CIm) therefrom, it being possible to evaluate these measuring signals separately in an evaluation device (AE1) assigned to the receive element (GLE).

2. Device according to Claim 1, characterized in that the optical fibres (LW1 to LWn) to be measured are joined to one another mechanically, preferably in the form of a ribbon cable (BL1, BL2).

3. Device according to one of the preceding claims, characterized in that the optical fibres (LW1 to LWn) are arranged arbitrarily in the coupling region of the respective bending coupler (BK1, BK2).

4. Device according to one of the preceding claims, characterized in that the transmit elements (TE0 to TEm) are arranged in a row structure or in an array structure.

5. Device according to one of the preceding claims, characterized in that a drive device (ASV1) for driving the transmit elements (TE0 to TEm) using time-division multiplex operation is provided in the optical transmitter (OT1).

6. Device according to one of the preceding claims, characterized in that launching means are provided in such a way that in each case the transmit radiation field (TF0 to TFm) of at least one transmit element (TE0 to TEm) passes with its light spot sequentially in time over the launching sections (TC0 to TCn) of the optical fibres (LW1 to LWn) in the coupling region (BK1).

7. Device according to Claim 6, characterized in that a beam-deflecting device is provided for moving the transmit radiation field (LS0) (Figure 3).

8. Device according to Claim 7, characterized in that a movable mirror (RS) is provided as beam-deflecting device.

9. Device according to Claim 7, characterized in that acousto/electro-optical means, in particular acousto-optical modulators, are provided as beam-deflecting device.

10. Device according to one of Claims 1 to 6, characterized in that an actuating device (BV2) for moving at least one transmit element (LA2) relative to the optical fibres (LW1 to LWn) to be measured is provided in the optical transmitter (OT1) in such a way that the transmit radiation field (PLS1) thereof respectively uses its light spot (LF0 to LFm) to illuminate sequentially in time in the coupling region the launching sections (TC1 to TCn) of the optical fibres (LW1 to LWn) to be measured.

11. Device according to one of Claims 1 to 6, characterized in that in the optical transmitter (OT1) a shutter device (BLV) is arranged in the transmit radiation field (BLV) of at least one transmit element (LA3), and in that this shutter device (BLV) has an opening such that that component of the transmit radiation field (BLV) which passes through this opening in each case can be launched sequentially in time only into respectively one part of the optical fibres (LW1 to LWn) to be measured.

12. Device according to Claim 11, characterized in that a mechanically movable passing slit (SH) is provided in the shutter device (BLV) as opening.

13. Device according to Claim 12, characterized in that an electro-optical opening is provided in the shutter device (BLV).

14. Device according to one of the preceding claims, characterized in that the optical transmitter (OT1) has a modulation device (Mo) for generating distinguishable transmit radiation fields (TF0 to TFm).

15. Device according to one of the preceding claims, characterized in that an imaging optical system (A0) is arranged between the transmit elements (TE0 to TEm) of the optical transmitter (OT1) and the optical fibres (LW1 to LWn) to be measured.

16. Device according to one of the preceding claims, characterized in that the light spot has an extent of at least half the thickness of the optical fibre ribbon (B11) along the respective launching section (TC1 to TCn) of the optical fibre (LW1) to be measured.

17. Device according to one of the preceding claims, characterized in that, in the coupling region along the launching sections (TC1 to TCn) of the optical fibres (LW1 to LWn) to be measured, the light spot (LF0 to LFm) has a width which corresponds at most to the spacing between the axes of two neighbouring optical fibres .

18. Device according to one of the preceding claims, characterized in that light emitting diodes are provided in the optical transmitter (OT1) as transmit elements (TE0 to TEm).

19. Device according to one of Claims 1 to 17, characterized in that a laser is provided in the optical transmitter (OT1) as transmit element (LA1).

20. Device according to one of the preceding claims, characterized in that lateral shutters (BD1 to BDn) are provided, and in that these are arranged in such a way that they produce decoupling of neighbouring transmit radiation fields (TF0 to TFm).

21. Device according to one of the preceding claims, characterized in that control means (SG1, SG2) are provided for aligning in a multiple splicing device (MS1) the optical fibres (LW1 to LWn/LW1* to LWn*) to be measured.

22. Device according to one of the preceding claims, characterized in that a computer (CPU) and a measured-value memory (MEM) are provided in the evaluation device (AE1), and in that this computer (CPU) is constructed in such a way that it functionally combines with one another the measuring signals (DS2) received by at least one receive element (GLE), in such a way that the optical transmission characteristics associated with the optical fibres (LW1 to LWn) to be measured can be evaluated selectively.

23. Device according to one of the preceding claims, characterized in that a display device (DSP1) for the measuring signals (CI0 to CImr) generated is provided in the evaluation device (AE1).

24. Device according to one of the preceding claims, characterized in that the device (ME) is a component of an optical fibre splicer.

25. Device according to one of Claims 1 to 23, characterized in that the device (ME) is a component of an optical fibre attenuation test set.

26. Method for measuring optical transmission characteristics of a plurality of optical fibres (LW1 to LWn), in which an optical transmitter (OT1) which has a smaller or a larger number of transmit elements (TE0 to TEm) than the number of optical fibres (LW1 to LWn) to be measured is, for the purpose of launching optical measuring signals (I0 to Im), coupled at the transmitting end to the optical fibres (LW1 to LWn) respectively to be measured with the aid of an associated coupling device (KV1), which is constructed as a bending coupler (BK1) around which each of the optical fibres (LW1 to LWn) to be measured is guided arcuately, forming a freely selectable, curved launching section (TC1 to TCn) in the process, in which in each case one transmit radiation field (TF0 to TFm) with a light spot (LF0 to LFm) is generated in the coupling region of the transmitting-end bending coupler (BK1) with the aid of at least one transmit element (TE0 to TEm), in which this light spot is passed sequentially in time along the launching sections (TC1 to TCn) of the optical fibres (LW1 to LWn) to be measured and in this case a measuring signal (I0 to Im) is launched in a selectively distinguishable way into the respective optical fibre (LW1 to LWn) to be measured, in which an optical receiver (OR1), for the purpose of outputting receive radiation fields and their optical measuring signals (I1 to Im), is coupled at the receiving end to the optical fibres (LW1 to LWn) to be measured with the aid of an associated coupling device (KV2), which is constructed as a bending coupler (BK2) around which each of the optical fibres (LW1 to LWn) to be measured is guided arcuately, forming a freely selectable, curved output section (RC1 to RCn) in the process, in which the receive radiation fields (RF0 to RFm) are received in the optical receiver (OR1) with the aid of at least one receive element (GLE) which, in the coupling region of the receiving-end bending coupler (BK2), detects the receive radiation fields (RF0 to RFm) output from the output sections (RC1 to RCn) of the optical fibres (LW1 to LWn) to be measured and generates distinguishable measuring signals (CI0 to CIm) therefrom, and in which these measuring signals are evaluated separately in an evaluation device (AE1) assigned to the receive element (GLE).

27. Method according to Claim 26, characterized in that the transmit radiation fields (TF0 to TFn) are modulated with different signals.

28. Method according to one of Claims 26 and 27, characterized in that use is made as transmit radiation fields (TF0 to TFm) of ones with different frequencies.

## Revendications

1. Dispositif (ME) pour faire des mesures sur plusieurs guides d'ondes lumineuses (LW1 à LWn), avec un émetteur optique (OT1), qui comporte un nombre d'éléments émetteurs (TE0 à TEm) inférieur ou supérieur au nombre des guides d'ondes lumineuses à mesurer (LW1 à LWn) et qui, avec l'aide d'un mécanisme de couplage correspondant, ayant la constitution d'un coupleur à flexion (BK1) autour duquel chaque guide d'ondes lumineuses à mesurer (LW1 à LWn) peut être guidé en forme d'arc pour former une section de couplage curviligne (TC1 à TCn), pouvant être choisie librement, peut être couplé, côté émission, à chacun des guides d'ondes lumineuses à mesurer (LW1 à LWn) pour le couplage de signaux optiques de mesure (I0 à Im), les éléments émetteurs (TE0 à TEm) étant disposés, par rapport aux guides d'ondes lumineuses (LW1 à LWn), dans la zone de couplage du coupleur à flexion (BK1), côté émission, de telle sorte et l'émetteur optique (OT1) étant constitué de telle sorte que, à l'aide d'au moins un élément émetteur (TE0 à TEm), un champ de rayonnement d'émission (TF0 à TFm) avec un spot lumineux (LF0 à LFm) soit généré, ce spot lumineux balayant, chronologiquement l'un après l'autre, les sections de couplage (TC1 à TCn) des guides d'ondes lumineuses à mesurer (LW1 à LWn) et couplant respectivement un signal de mesure, sélectivement discemable, dans les guides d'ondes lumineuses respectifs (LW1 à LWn), ainsi qu'avec un récepteur optique (OR1), qui, avec l'aide d'un mécanisme de couplage correspondant (KV2), ayant la constitution d'un coupleur à flexion (BK2) autour duquel chaque guide d'ondes lumineuses à mesurer (LW1 à LWn) peut être guidé en forme d'arc pour former une section de captage curviligne (RC1 à RCn), pouvant être choisie librement, peut être couplé, côté réception, aux guides d'ondes lumineuses à mesurer (LWI à LWn) pour le captage de champs de rayonnement en réception ainsi que de leurs signaux optiques de mesure (I1 à Im), et qui comporte, pour la réception de ces champs de rayonnement en réception (RF0 à RFm), au moins un élément récepteur (GLE) aligné dans la zone de couplage de ce coupleur à flexion côté réception (BK2) et formé de telle sorte que cet élément récepteur (GLE) capte les champs de rayonnement en réception (RF0 à RFm) découplés dans les sections de découplage (RC1 à RCn) des guides d'ondes lumineuses à mesurer (LW1 à LWn) et en génère des signaux de mesure discernables les uns des autres (CI0 à CIm), ces signaux de mesure pouvant être analysés séparément dans un dispositif d'évaluation (AE1), affecté à l'élément récepteur (GLE).

2. Dispositif selon la revendication 1
**caractérisé par le fait**
que les guides d'ondes lumineuses à mesurer (LW1 à LWn) sont reliés mécaniquement entre eux, de préférence sous forme d'un câble en ruban (BL1, BL2).

3. Dispositif selon une des revendications précédentes
**caractérisé par le fait**
que les guides d'ondes lumineuses à mesurer (LW1 à LWn) sont placés d'une façon quelconque dans la zone de couplage du coupleur à flexion respectif (BK1, BK2).

4. Dispositif selon une des revendications précédentes
**caractérisé par le fait**
que les éléments émetteurs (TE0 à TEm) sont placés dans une structure en ligne ou dans une structure Array.

5. Dispositif selon une des revendications précédentes
**caractérisé par le fait**
que, dans l'émetteur optique (OT1), un mécanisme d'excitation (ASV1) est prévu pour exciter les éléments émetteurs (TE0 à TEm) en exploitation multiplex temporelle.

6. Dispositif selon une des revendications précédentes
**caractérisé par le fait**
que des moyens de couplage sont prévus de telle sorte que chaque champ de rayonnement d'émission (TF0 à TFm) d'au moins un élément émetteur (TE0 à TEm) balaye avec son spot lumineux, dans la zone de couplage (BK1), chronologiquement l'une après l'autre, les sections de couplage (TC0 à TCn) des guides d'ondes lumineuses (LW1 à LWn).

7. Dispositif selon la revendication 6
**caractérisé par le fait**
qu'un mécanisme de déviation des rayons est prévu pour le déplacement du champ de rayonnement d'émission (LS0) (Figure 3).

8. Dispositif selon la revendication 7
**caractérisé par le fait**
qu'un miroir mobile (RS) est prévu comme mécanisme de déviation des rayons.

9. Dispositif selon la revendication 7
**caractérisé par le fait**
que des moyens acousto/électro-optiques, particulièrement des modulateurs acousto-optiques, sont prévus comme mécanisme de déviation des rayons.

10. Dispositif selon une des revendications 1 à 6
**caractérisé par le fait**
que, dans l'émetteur optique (OT1), un mécanisme de manoeuvre (BV2), conçu pour déplacer au moins un élément émetteur (LA2) par rapport aux guides d'ondes lumineuses à mesurer (LW1 à LWn), est prévu de telle sorte que, dans la zone de couplage, son champ de rayonnement d'émission (PLS1) éclaire avec son spot lumineux (LF0 à LFm), chronologiquement l'une après l'autre, chaque section de couplage (TC1 à TCn) des guides d'ondes lumineuses (LW1 à LWn).

11. Dispositif selon une des revendications 1 à 6
**caractérisé par le fait**
que, dans l'émetteur optique (OT1), un mécanisme à diaphragme (BLV) est placé dans le champ de rayonnement d'émission (BA) d'au moins un élément émetteur (LA3) et que ce mécanisme à diaphragme (BLV) comporte une ouverture de telle sorte que la part respective (LB) du champ de rayonnement d'émission (BA) sortant par cette ouverture ne peut être couplée, respectivement, que dans une partie des guides d'ondes lumineuses à mesurer (LW1 à LWn), chronologiquement une partie après l'autre.

12. Dispositif selon la revendication 11
**caractérisé par le fait**
que, dans le mécanisme à diaphragme (BLV), une fente de transmission (SH) déplaçable mécaniquement, est prévue comme ouverture.

13. Dispositif selon la revendication 12
**caractérisé par le fait**
que, dans le mécanisme à diaphragme (BLV), une ouverture électro-optique est prévue.

14. Dispositif selon une des revendications précédentes
**caractérisé par le fait**
que l'émetteur optique (OT1) comporte un dispositif de modulation (M0) pour la génération de champs de rayonnement d'émission (TF0 à TFm) discernables l'un de l'autre.

15. Dispositif selon une des revendications précédentes
**caractérisé par le fait**
qu'une optique de reproduction (A0) est placée, dans la zone de couplage, entre les éléments émetteurs (TE0 à TEm) de l'émetteur optique (OT1) et les guides d'ondes lumineuses à mesurer (LW1 à LWn).

16. Dispositif selon une des revendications précédentes
**caractérisé par le fait**
que le spot lumineux a, le long de la section respective de couplage (TC1 à TCn) du guide d'ondes lumineuses à mesurer (LW1), une dimension au moins égale à la moitié de l'épaisseur du ruban (BL1) de guides d'ondes lumineuses.

17. Dispositif selon une des revendications précédentes
**caractérisé par le fait**
que, dans la zone de couplage le long des sections de couplage (TC1 à TCn) des guides d'ondes lumineuses à mesurer (LW1 à LWn), le spot lumineux (LF0 à LFm) a une largeur qui correspond au maximum à la distance entre les axes de deux guides d'ondes lumineuses voisins.

18. Dispositif selon une des revendications précédentes
**caractérisé par le fait**
que, dans l'émetteur optique (OT1), des diodes luminescentes sont prévues comme éléments émetteurs (TE0 à TEm).

19. Dispositif selon une des revendications 1 à 17
**caractérisé par le fait**
que, dans l'émetteur optique (OT1), un laser est prévu comme élément émetteur (LA1).

20. Dispositif selon une des revendications précédentes
**caractérisé par le fait**
que des écrans latéraux (BD1 à BDn) sont prévus et que ceux-ci sont placés de telle sorte qu'ils réalisent un découplage de champs de rayonnement d'émission voisins (TF0 à TFm).

21. Dispositif selon une des revendications précédentes
**caractérisé par le fait**
que des moyens de réglage (SG1, SG2) sont prévus pour ajuster les guides d'ondes lumineuses à mesurer (LW1 à LWn / LW1* à LWn*) dans un dispositif à épissurage multiple (MS1).

22. Dispositif selon une des revendications précédentes
**caractérisé par le fait**
qu'une unité de calcul (CPU) ainsi qu'une mémoire de valeurs de mesure (MEM) sont prévues dans le dispositif d'évaluation (AE1) et que cette unité de calcul (CPU) est constituée de telle sorte qu'elle combine fonctionnellement, les uns avec les autres, les signaux de mesure (DS2) captés par au moins un élément récepteur (GLE) de telle sorte que les caractéristiques optiques de transmission correspondant aux guides d'ondes lumineuses à mesurer (LW1 à LWn) peuvent être évaluées d'une façon sélective.

23. Dispositif selon une des revendications précédentes
**caractérisé par le fait**
qu'un mécanisme d'affichage (DSP1) est prévu dans le dispositif d'évaluation (AE1) pour les signaux de mesure générés (CI0 à CIm).

24. Dispositif selon une des revendications précédentes
**caractérisé par le fait**
que le dispositif (ME) fait partie d'un appareil à épissurage pour guides d'ondes lumineuses.

25. Dispositif selon une des revendications 1 à 23
**caractérisé par le fait**
que le dispositif (ME) fait partie d'un appareil de mesure d'affaiblissement pour guides d'ondes lumineuses.

26. Procédé pour mesurer des caractéristiques optiques de transmission de plusieurs guides d'ondes lumineuses (LW1 à LWn), un émetteur optique (OT1), qui comporte un nombre d'éléments émetteurs (TE0 à TEm) inférieur ou supérieur au nombre des guides d'ondes lumineuses à mesurer (LW1 à LWn) étant couplé, côté émission, pour le couplage de signaux optiques de mesure (I0 à Im) respectivement dans les guides d'ondes lumineuses à mesurer (LW1 à LWn), à l'aide d'un mécanisme de couplage correspondant (KV1), ayant la constitution d'un coupleur à flexion (BKI) autour duquel chaque guide d'ondes lumineuses à mesurer (LWI à LWn) est guidé en forme d'arc pour former une section de couplage curviligne (TC1 à TCn), pouvant être choisie librement, un champ de rayonnement d'émission (TF0 à TFm) avec un spot lumineux (LF0 à LFm) étant respectivement généré, à l'aide d'au moins un élément émetteur (TE0 à TEm), dans la zone de couplage du coupleur à flexion (BK1) côté émission, ce spot lumineux (LF0 à LFm) balayant, chronologiquement l'une après l'autre, les sections de couplage (TC1 à TCn) des guides d'ondes lumineuses à mesurer (LW1 à LWn) et couplant, ainsi et d'une façon sélectivement discemable, un signal de mesure (I0 à Im), dans les guides d'ondes lumineuses respectifs (LW1 à LWn), un récepteur optique (OR1), étant couplé, côté réception, avec l'aide d'un mécanisme de couplage correspondant (KV2), ayant la constitution d'un coupleur à flexion (BK2) autour duquel chaque guide d'ondes lumineuses à mesurer (LW1 à LWn) est guidé en forme d'arc pour former une section de découplage curviligne (RC1 à RCn), pouvant être choisie librement, aux guides d'ondes lumineuses à mesurer (LW1 à LWn) pour le captage de champs de rayonnement en réception ainsi que de leurs signaux optiques de mesure (I1 à Im), les champs de rayonnement en réception (RF0 à RFm) étant reçus dans le récepteur optique (OR1) à l'aide d'au moins un élément récepteur (GLE) qui, dans la zone de couplage de ce coupleur à flexion côté réception (BK2), capte les champs de rayonnement en réception (RF0 à RFm) découplés dans les sections de découplage (RC1 à RCn) des guides d'ondes lumineuses à mesurer (LW1 à LWn) et en génère des signaux de mesure discernables les uns des autres (CI0 à CIm), ces signaux de mesure pouvant être séparément analysés dans un dispositif d'évaluation (AE1), affecté à l'élément récepteur (GLE).

27. Procédé selon la revendication 26
**caractérisé par le fait**
que les champs de rayonnement d'émission (TF0 à TFm) sont modulés avec des signaux différents.

28. Procédé selon une des revendications 26 ou 27
**caractérisé par le fait**
qu'on utilise, comme champs de rayonnement d'émission (TF0 à TFm), des champs de rayonnement d'émission avec des fréquences différentes.
